# EUROPEAN PATENT SPECIFICATION

(11) **EP 3 044 749 B1**
(45) Date of publication and mention of the grant of the patent: **14.07.2021**
(21) Application number: 14781735.7
(22) Date of filing: 15.09.2014
(51) Int. Cl.: G07F 9/02, G06Q 30/06, G07F 11/00, G07F 13/06, G07F 9/00

(54) **PRODUCT CATEGORIZATION USER INTERFACE FOR A DISPENSING DEVICE**
PRODUKTKATEGORISIERUNGSBENUTZERSCHNITTSTELLE FÜR EINE ABGABEVORRICHTUNG
INTERFACE UTILISATEUR DE CATÉGORISATION DE PRODUITS POUR DISPOSITIF DE DISTRIBUTION

(30) Priority: 13.09.2013 US 201361877549 P
(43) Date of publication of application: 20.07.2016
(73) Proprietor: The Coca-Cola Company, Atlanta, GA 30313 (US)
(72) Inventor: TAYLOR, Sydney Abram, Atlanta, GA 30313 (US); JONES, Cynthia D., Atlanta, GA 30313 (US); CHA, Jae-ho, Woodstock, GA 30188 (US); LIND, Samuel Thomas, San Francisco, CA 94117 (US); SNOWDEN, Christopher Paul, Grayson, GA 30017 (US); CUPPARI, Scot, Atlanta, GA 30313 (US)
(74) Representative: Dehns
(86) International application number: PCT/US2014/055645
(87) International publication number: WO 2015/039026

(56) References cited:
- WO-A1-2011/163233
- GB-A- 2 442 223
- US-A1- 2008 004 973
- US-A1- 2013 096 715
- US-A1- 2013 231 774

## Description

### BACKGROUND

Modern dispensing devices include functionality for consumers to select from a menu of available products for purchase or dispense through the use of a touchscreen interface. Typically, the consumer is presented with a global list of products (e.g., beverages) for purchase or dispense via the touchscreen interface. The consumer may then either scan through the presented products or, if there are a large number of products which may be selected, individually scroll through each of the products until a desired product is located. There are a number of drawbacks however, associated with the current consumer experience when interacting with current dispensing devices. One drawback is that since modern dispensing devices are capable of dispensing scores of products, the consumer may be required to spend a significant amount of time scanning or scrolling through the global list presented on the touchscreen before finding a desired product for purchase or dispense. Another drawback associated with current dispensing devices is that they fail to present additional information about a product (e.g., nutritional information) to assist consumers in making a decision for purchase. Yet another drawback associated with current dispensing devices is that they fail to identify products which may be offered but are currently unavailable for purchase (i.e., "sold out") in an expeditious fashion. In contrast, unavailable products are often presented as options for purchase with consumers only determining that the product is unobtainable after making an actual selection of the product on the dispensing device. It is with respect to these considerations and others that the various embodiments of the present invention have been made.

US 2013/0231774 A1 discloses a convenience beverage machine. A consumer may identify themselves at the convenience beverage machine by means of an NFC device, an RFID device and the like. This identification may result in a computer associated with the beverage vending machine recognizing the consumer, and subsequently pulling up the consumer's account information along with previous dink selections and mixtures made by the consumer.

### SUMMARY

In a first aspect, the present invention provides a dispensing device, comprising: a memory for storing executable program code; a display screen; and a processor, functionally coupled to the memory, the processor being responsive to computer-executable instructions included in the program code and operative to: receive consumer biometric data including the consumer's body mass index and/or recent physical activity performed by the consumer via a handshaking procedure with a mobile computing device; and display on the display screen a customised user interface based upon said received consumer biometric data, the customised user interface comprising a menu, the menu comprising one or more selectable user controls for displaying one or more sub menus utilizable by the consumer to select one or more beverage products including a list of recommended beverages based upon the received consumer biometric data; receive a selection of one of the plurality of products from the one or more sub menus; receive an action request corresponding to the selected one of the plurality of products from the one or more sub menus via the display screen; and execute an action associated with the selected one of the plurality of products from the one or more sub menus in response to receiving the action request.

In a second aspect, the present invention provides a computer-readable storage medium storing computer executable instructions which, when executed by a computing device, will cause the computing device to perform a method of providing a product categorization user interface, the method comprising: receiving consumer biometric data including the consumer's body mass index and/or recent physical activity performed by the consumer from a mobile computing device via a handshaking procedure with the mobile computing device; based upon said received consumer biometric data, displaying one or more possible beverage choice options on a customised user interface, including a list of recommended beverages based on the received consumer biometric data; receiving a beverage selection from the user interface; and issuing a command for the beverage selection to be dispensed.

### BRIEF DESCRIPTION OF THE DRAWINGS

FIGURE 1 is a block diagram illustrating a network architecture for providing a product categorization user interface on a dispensing device, in accordance with an embodiment;
FIGURE 2A shows a user interface which may be utilized for selecting a menu associated with different product categories which may be dispensed from a dispensing device, in accordance with an embodiment;
FIGURE 2B shows a user interface which may be utilized for selecting a menu associated with different product categories which may be dispensed from a dispensing device, in accordance with an alternative embodiment;
FIGURE 3A shows a user interface which may be utilized for selecting a sub-menu associated with a selected product category from the user interface of FIGURES 2A and 2B, in accordance with an embodiment;
FIGURE 3B shows a user interface which may be utilized for selecting a product from the sub-menu associated with the selected product category shown in FIGURE 3A, in accordance with an embodiment;
FIGURE 3C shows a user interface which may be utilized for displaying information about a selected product, in accordance with an embodiment;
FIGURE 4A shows a user interface which may be utilized for selecting a sub-menu associated with a selected product category from the user interface of FIGURES 2A and 2B, in accordance with an embodiment;
FIGURE 4B shows a user interface which may be utilized for selecting a product from the sub-menu associated with the selected product category shown in FIGURE 4A, in accordance with an embodiment;
FIGURE 4C shows a user interface which may be utilized for selecting a product associated with a list of flavored beverage products shown in FIGURE 4B, in accordance with an embodiment;
FIGURE 5 shows a user interface which may be utilized for selecting a sub-menu associated with a selected product category from the user interface of FIGURES 2A and 2B, in accordance with an embodiment;
FIGURE 6 shows a user interface which may be utilized for selecting a sub-menu associated with a selected product category from the user interface of FIGURES 2A and 2B, in accordance with an embodiment;
FIGURE 7A shows a user interface which may be utilized for selecting a sub-menu associated with a selected product category from the user interface of FIGURES 2A and 2B, in accordance with an embodiment;
FIGURE 7B shows a user interface displaying a promotional campaign selected from a sub-menu displayed in the user interface of FIGURE 7A, in accordance with an embodiment;
FIGURE 8A shows a dispensing device configured for offering products for a limited time period and/or to a limited number of consumers, in accordance with an embodiment;
FIGURE 8B shows a user interface for selecting products associated with a limited time promotional campaign from the dispensing device shown in FIGURE 8A, in accordance with an embodiment;
FIGURE 9 shows a network architecture for utilizing biometric data to recommend consumer product selections, in accordance with an embodiment;
FIGURE 10 shows a network architecture for deploying product themes for use by consumers on a limited basis, in accordance with an embodiment;
FIGURE 11 shows a user interface for selecting favorite products and custom product mixes which may be accessed via a handshake operation from the user interface of FIGURES 2A and 2B, in accordance with an embodiment;
FIGURE 12A shows a user interface for selecting sub-menus associated with favorite products and custom product mixes, in accordance with an embodiment;
FIGURE 12B shows a user interface for selecting sub-menus associated with favorite products and custom product mixes, in accordance with an embodiment;
FIGURE 13 shows a user interface for selecting favorite products after a selection of one of the sub-menus shown in FIGURES 12A and 12B, in accordance with an embodiment;
FIGURE 14 shows a user interface for selecting custom product mixes after a selection of one the sub-menus shown in FIGURES 12A and 12B, in accordance with an embodiment;
FIGURE 15 shows a user interface which may be utilized for directly accessing a product from the user interface of FIGURES 2A and 2B, in accordance with an embodiment;
FIGURE 16A shows a user interface which may be utilized for expediting the selection of a product for dispensing from a dispensing device, in accordance with an embodiment;
FIGURE 16B shows a user interface which may be utilized for expediting the selection of a product for dispensing from a dispensing device, in accordance with an embodiment;
FIGURE 16C shows a user interface which may be utilized for expediting the selection of a product for dispensing from a dispensing device, in accordance with an embodiment;
FIGURE 17A shows a user interface which may be utilized for showing an animation associated with the dispensing of a selected product from a dispensing device, in accordance with an embodiment;
FIGURE 17B shows a user interface which may be utilized for showing an animation associated with the dispensing of a selected product from a dispensing device, in accordance with an embodiment;
FIGURE 17C shows a user interface which may be utilized for showing an animation associated with the dispensing of a selected product from a dispensing device, in accordance with an embodiment;
FIGURE 17D shows a user interface which may be utilized for showing an animation associated with the dispensing of a selected product from a dispensing device, in accordance with an embodiment;
FIGURE 18A shows a user interface which may be utilized for indicating a sold-out status of a product which may be dispensed from a dispensing device, in accordance with an embodiment;
FIGURE 18B shows a user interface which may be utilized for indicating a sold-out status of a product which may be dispensed from a dispensing device, in accordance with an embodiment;
FIGURE 19A shows a user interface which may be utilized for displaying instructions for selecting and dispensing a product from a dispensing device, in accordance with an embodiment;
FIGURE 19B shows a user interface which may be utilized for displaying instructions for selecting and dispensing a product from a dispensing device, in accordance with an embodiment;
FIGURE 19C shows a user interface which may be utilized for displaying instructions for selecting and dispensing a product from a dispensing device, in accordance with an embodiment;
FIGURE 19D shows a user interface which may be utilized for displaying instructions for selecting and dispensing a product from a dispensing device, in accordance with an embodiment;
FIGURE 19E shows a user interface which may be utilized for displaying instructions for selecting and dispensing a product from a dispensing device, in accordance with an embodiment;
FIGURE 20 is a flow diagram illustrating a routine for providing a product categorization user interface on a dispensing device, in accordance with an embodiment; and
FIGURE 21 is a simplified block diagram of a dispensing device with which various embodiments may be practiced.

### DETAILED DESCRIPTION

Embodiments are provided for a product categorization user interface on dispensing device from which a product may be selected. The dispensing device may display a menu of product categories in the user interface. A selection of one of the product categories may then be received from the menu. The dispensing device may then display a sub-menu corresponding to a selected one of the plurality of products category in the user interface. A selection of a product may then be received from the sub-menu on the dispensing device. An action request may then be received which corresponds to the selected one of the plurality of products. In response to the action request, the dispensing device may then execute an action associated with the selected one of the plurality of products from the sub-menu.

In the following detailed description, references are made to the accompanying drawings that form a part hereof, and in which are shown by way of illustrations specific embodiments or examples. These embodiments may be combined, other embodiments may be utilized, and structural changes may be made without departing from the scope of the present invention as defined in the claims. The following detailed description is therefore not to be taken in a limiting sense.

It should be understood that "beverage," as used herein, includes, but is not limited to, pulp and pulp-free citrus and non-citrus fruit juices, fruit drink, vegetable juice, vegetable drink, milk, soy milk, protein drink, soy-enhanced drink, tea, water, isotonic drink, vitamin-enhanced water, soft drink, flavored water, energy drink, coffee, smoothies, yogurt drinks, hot chocolate and combinations thereof. The beverage may also be carbonated or non-carbonated. The beverage may comprise beverage components (e.g., beverage bases, colorants, flavorants, and additives).

The term "beverage base" refers to parts of the beverage or the beverage itself prior to additional colorants, additional flavorants, and/or additional additives. According to certain embodiments of the present invention, beverage bases may include, but are not limited to syrups, concentrates, and the like that may be mixed with a diluent such as still or carbonated water or other diluent to form a beverage. The beverage bases may have reconstitution ratios of about 3:1 to about 6:1 or higher. According to certain embodiments, beverage bases may comprise a mixture of beverage base components.

The term "beverage base component" refers to components which may be included in beverage bases. According to certain embodiments of the present invention, the beverage base component may comprise parts of beverages which may be considered food items by themselves. According to certain embodiments of the present invention, the beverage base components may be micro-ingredients such as an acid portion of a beverage base; an acid-degradable and/or non-acid portion of a beverage base; natural and artificial flavors; flavor additives; natural and artificial colors; nutritive or non-nutritive natural or artificial sweeteners; additives for controlling tartness, e.g., citric acid, potassium citrate; functional additives such as vitamins, minerals, or herbal extracts; nutraceuticals; or medicaments. The micro-ingredients may have reconstitution ratios from about 10:1, 20:1, 30:1, or higher with many having reconstitution ratios of 50:1 to 300:1. The viscosities of the micro-ingredients may range from about 1 to about 100 centipoise.

Thus, for the purposes of requesting, selecting, or dispensing a beverage base, a beverage base formed from separately stored beverage base components may be equivalent to a separately stored beverage base. For the purposes of requesting, selecting or dispensing a beverage, a beverage formed from separately stored beverage components may be equivalent to a separately stored beverage.

By "separately stored" it is meant that the components of the present invention are kept separate until combined. For instance, the components may be separately stored individually in each container or may be all stored in one container wherein each component is individually packaged (e.g., plastic bags) so that they do not blend while in the container. In some embodiments, the container, itself, may be individual, adjacent to, or attached to another container.

The term "blended beverage" includes final products wherein two or more beverages have been blended or mixed or otherwise combined to form a final product.

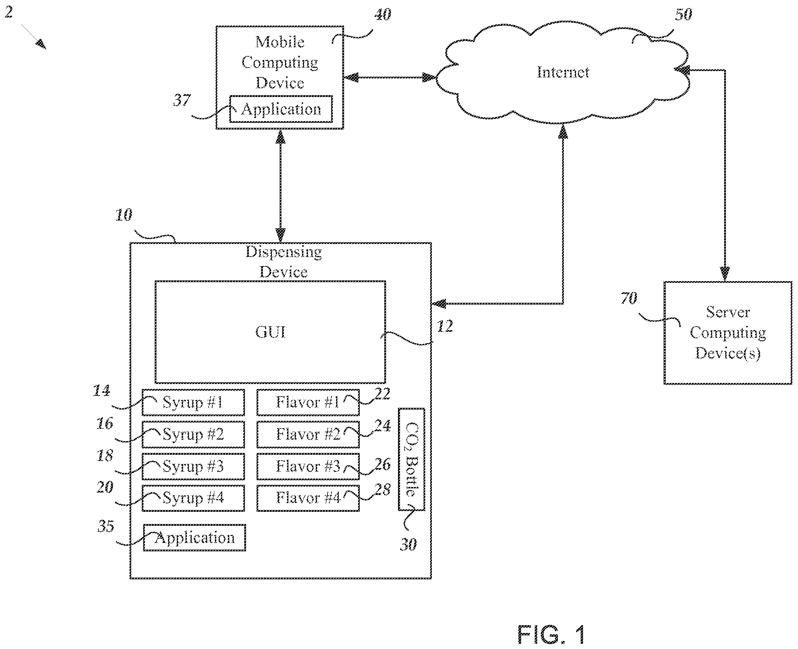

Referring now to the drawings, in which like numerals represent like elements through the several figures, various aspects of the present invention will be described. FIGURE 1 is a block diagram illustrating a network architecture 2 for providing a product categorization user interface on a dispensing device, in accordance with an embodiment. The network architecture 2 includes a dispensing device 10 in communication with a mobile computing device 40 (e.g., a smartphone, tablet or laptop computer) and one or more server computing devices 70 (over the Internet 50). The mobile computing device 40 may further comprise an application 37 for communicating with the dispensing device 10 and Internet 50. In accordance with some embodiments, the communication between the mobile computing device 40 and the dispensing device 10 may be accomplished utilizing any number of communication techniques known to those skilled in the art including, but not limited to, BLUETOOTH wireless technology, Near Field Communication ("NFC"), Wi-Fi and other wireless communication standards or technologies. The mobile computing device 40 may also communicate with the dispensing device 10 by scanning a one or two-dimensional barcode (e.g., a QR code) or other symbol shown on a tag or sticker affixed to, printed on the dispensing device 10 or displayed on a display of the dispensing device 10.

The dispensing device 10 may comprise various beverage bases or beverage base components such as beverage bases 14, 16, 18 and 20 as well as flavors (i.e., flavoring agents, flavor concentrates, or flavor syrups) 22, 24, 26 and 28. In some embodiments, the beverage bases 14, 16, 18, and 20 may be concentrated syrups. In some embodiments, the beverage bases 14, 16, 18 and 20 may be replaced with or additionally provided with beverage base components. In accordance with an embodiment, each of the beverage bases 14, 16, 18 and 20 or beverage base components and each of the flavors 22, 24, 26 and 28 may be separately stored or otherwise contained in individual removable cartridges which are stored in the dispensing device 10. The dispensing device 10 may automatically identify the cartridges upon installation by a user or the user may be prompted to identify the cartridges when they are installed. It should be appreciated that the aforementioned beverage components (i.e., beverage bases or beverage base components and flavors) may be combined, along with other beverage ingredients 30, to dispense various beverages or blended beverages (i.e., finished beverage products) from the dispensing device 10. It should be understood however, that the dispensing device 10 may also be configured to dispense beverage components individually. In some embodiments, the dispensing device 10 may be configured to dispense beverage base components so as to form a beverage base. The other beverage ingredients 30 may include diluents such as still or carbonated water, functional additives, or medicaments, for example. The other beverage ingredients 30 may be installed in the dispensing device 10, pumped to the dispensing device 10, or both. The carbonated water may be produced in the dispensing device 10 through mixing of CO₂ and still water such as in a carbonator or other device that produces carbonated water.

Application 35 may be configured to generate a graphical user interface ("GUI") 12 on a display screen (not shown) of the dispensing device 10. The GUI 12 may be utilized to select and individually dispense one or more beverages from the dispensing device 10. The beverages may be dispensed as beverage components in a continuous pour operation whereby one or more selected beverage components continue to be dispensed while a pour input is actuated by a user or in a batch pour operation whereby a predetermined volume of one or more selected beverage components are dispensed (e.g., one ounce at a time).

The GUI 12 on the dispensing device 10 may be addressed via a number of methods to select and dispense beverages. For example, a user may interact with the GUI 12 via touch input to navigate one or more menus from which to select and dispense a beverage. As another example, a user may type in a code using an onscreen or physical keyboard (not shown) on the dispensing device 10 to navigate one or more menus from which to select and dispense a beverage. As yet another example, a user may use the mobile computing device 40 to scan a one or two-dimensional barcode (e.g., a QR code) or other symbol shown on a tag or sticker affixed to, printed on the dispensing device 10 or displayed on a display of the dispensing device 10 to select a beverage for dispensing.

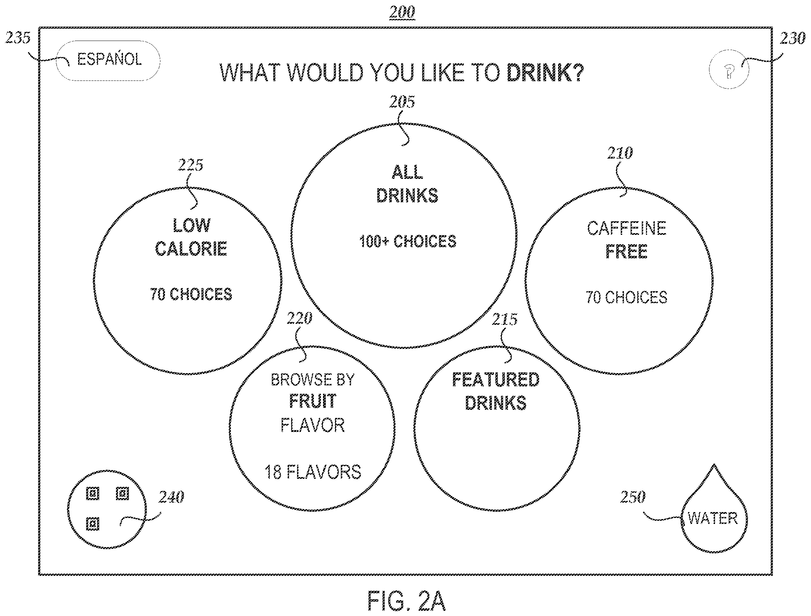

FIGURE 2A shows a user interface 200 which may be utilized for selecting a menu associated with different product categories which may be dispensed from the dispensing device 10. The user interface 200 may be generated by the application 35 executing on the dispensing device 10. The user interface 200 includes a main menu of product categories 205, 210, 215, 220 and 225 which may be selected by a consumer. In accordance with some embodiments, each of the aforementioned categories may correspond to various product categories such as all of a number of beverage brands available on the dispensing device 10 (e.g., the product category 205), a caffeine-free beverage category (e.g., the product category 210), a featured category associated with beverages tied to one or more promotional or advertising campaigns (e.g., the product category 215), a flavor category in which beverages are organized corresponding to a particular fruit flavor or other particular flavor additive available on the dispensing device 10 (e.g., the product category 220) and a low-calorie beverage category (e.g., the product category 225).

The user interface 200 also includes a "Help" user control 230 which may be selected by a consumer to review instructions for selecting and dispensing a product from dispensing device 10. The user interface 200 also includes a language toggle user control 235 which may be selected by a consumer to change the language utilized on the GUI 12 of the dispensing device 10. The user interface 200 also includes a bar code 240 which may comprise a one or two-dimensional barcode (e.g., a QR code) or other symbol which may be utilized by a consumer to uniquely identify the dispensing device 10 so as to enable a customized interaction or enable the consumer to remotely access the dispensing device 10 from a mobile computing device (such as a smartphone or tablet computer). The aforementioned consumer customized interactions and remote access tasks are described in related patent application U.S. Serial No. 61/863,269 entitled "Dynamically Adjusting Ratios of Beverages in a Mixed Beverage," filed on August 7, 2013. The user interface 200 also includes a user control 250 for directly accessing a product (e.g., water) from the main menu of product categories 205-225. It should be appreciated that the user control 250 may be utilized by a consumer who only wishes to quickly dispense a product without having to navigate through one or more of the product categories 205-225.

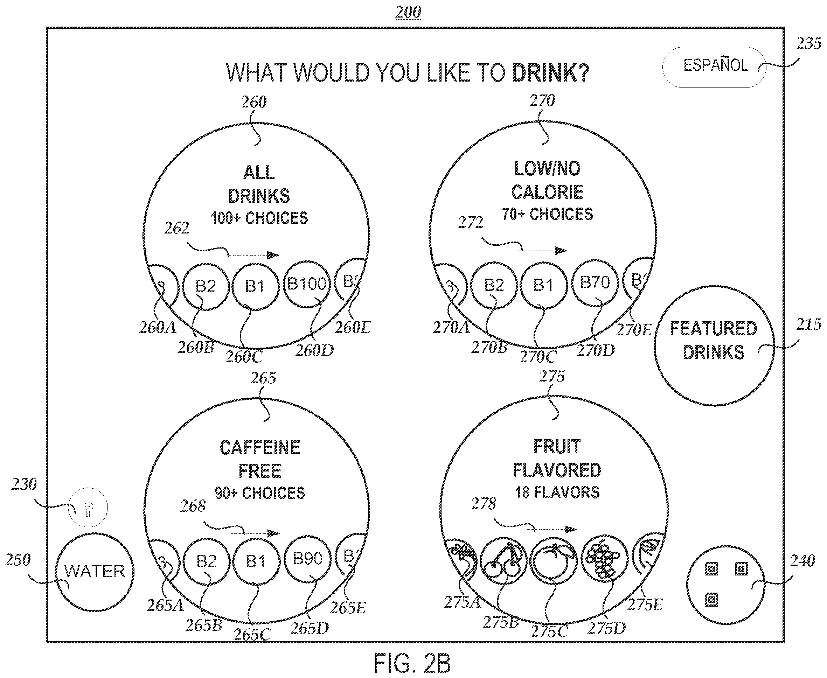

FIGURE 2B shows a user interface 200 which may be utilized for selecting a menu associated with different product categories which may be dispensed from the dispensing device 10 in an alternative embodiment. The user interface 200 may be generated by the application 35 executing on the dispensing device 10. As discussed above with respect to FIGURE 2A, the user interface 200 may include the Help user control 230, the language toggle user control 235, the bar code 240 and the user control 250 for directly accessing a product (e.g., water) from the menu of displayed product categories.

The user interface 200 further includes a main menu of product categories 215, 260, 265, 270 and 275. As discussed above with respect to FIGURE 2A, the product category 215 may comprise a featured category associated with beverages tied to one or more promotional or advertising campaigns. The product categories 260-275 may each include a list of available products which may be selected by a consumer.
For example, the product category 260 may comprise an "All Drinks" category for selecting all of a number of beverage brands which are currently available on the dispensing device 10, the product category 265 may comprise a "Caffeine Free" category for selecting all of a number of non-caffeinated beverage brands which are currently available on the dispensing device 10, the product category 270 may comprise a "Low/No Calorie" category for selecting all of a number of low and no calorie beverage brands which are currently available on the dispensing device 10, and the product category 275 may comprise a "Fruit Flavored" category for selecting all of a number of flavored beverage brands which are currently available on the dispensing device 10. The number of currently available beverage brands which may be selected within each of the product categories 260-275 may also be displayed as scrolling user interface elements which may include graphics and/or text corresponding to an associated product within a product category. For example, the product category 260 may display user interface elements 260A, 260B, 260C, 260D and 260E as scrolling horizontally in the direction indicated by arrow 262, the product category 265 may display user interface elements 265A, 265B, 265C, 2605 and 265E as scrolling horizontally in the direction indicated by arrow 268, the product category 270 may display user interface elements 270A, 270B, 270C, 270D and 270E as scrolling horizontally in the direction indicated by arrow 272, and the product category 275 may display user interface elements 275, 275B, 275C, 275D and 275E as scrolling horizontally in the direction indicated by arrow 268. It should be understood that additional user interface elements (not shown) which represent additional available products within the product categories 260-275 may be displayed as the product list is scrolled across each product category. Thus, the total number of scrolling user interface elements displayed in the user interface 200 may be equal to the total number products available for selection in each of the product categories 260-275. For example, for the product category 275 may display a total of eighteen scrolling user interface elements corresponding to the eighteen flavored beverage products which are available for selection. It should further be understood that the available products for each product category may be scrolled horizontally (in either a right or left direction) or vertically (in either an upward or downward direction), in various embodiments. In one embodiment, each of the user interface elements 260A-260E, 265A-265E, 270A-270E and 275A-275E may further comprise a selectable user control which may be configured to allow a consumer to select a product for dispense without having to further navigate through the product categories 260, 265, 270 and 275 such as described above in FIGURE 2A with respect to the user control 250.

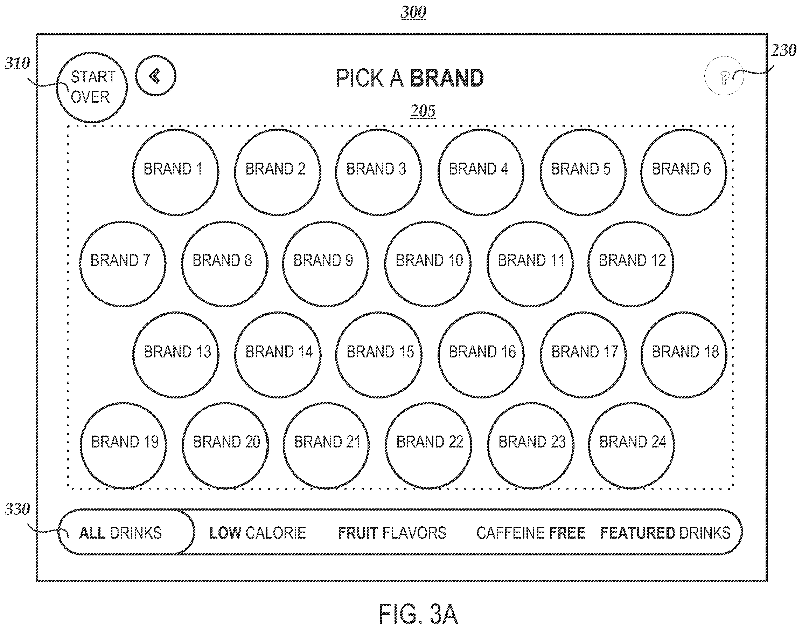

FIGURE 3A shows a user interface 300 which may be utilized for selecting a sub-menu associated with a selected product category from the user interface 200 of FIGURES 2A and 2B on the dispensing device 10. The user interface 300 may be generated by the application 35 executing on the dispensing device 10. The user interface 300 includes a sub-menu of the product category 205 and, in accordance with some embodiments, may display a menu of beverage brands which may be available for dispensing from the dispensing device 10. The user interface 300 also includes a user control 310 for returning to a "Start" screen on the dispensing device 10 and a user control 320 for returning to a previously displayed screen (i.e., the product category menu shown in the user interface 200) on the dispensing device 10. The user interface 300 also includes the "Help" user control 230 which may be selected by a consumer to review instructions for selecting and dispensing a product from dispensing device 10. The user interface 300 also includes a navigation menu 330 which displays the currently selected product category as well as user interface buttons for navigating to other product category screens (which may be selected in the event a consumer mistakenly selected the current sub-menu or changed his or her mind after selecting the current sub-menu).

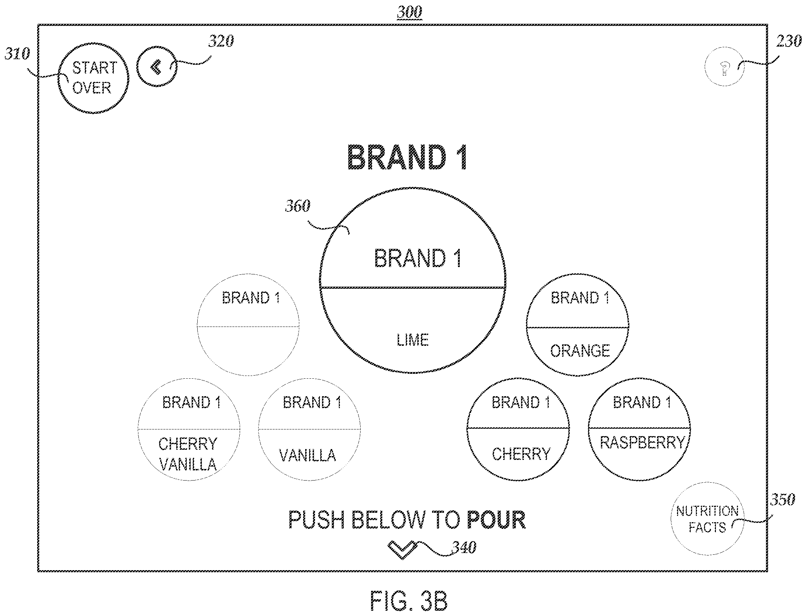

FIGURE 3B shows the user interface 300 which may be utilized for selecting a product from the sub-menu associated with the selected product category shown in FIGURE 3A. For example, in response to a consumer selecting a product (i.e., "Brand 1") from the sub-menu in Figure 3A, the user interface 300 may display the various choices associated with the selected product including, for example, various flavor versions associated with the selected product. The user interface 300 also shows the selection of a product 360 (i.e., "Brand 1, Lime") from the displayed choices as indicated by the product 360 being emphasized (i.e., displayed larger) with respect to the other displayed products in the user interface 300. The user interface 300 also includes a user control 340 to initiate an action (e.g., the pouring of a beverage) associated with the selected product 360 from the dispensing device 10. In some embodiments, the user control 340 may simply be a notification for a consumer to activate a pour mechanism (not shown) which is separate from the user interface 300. The user interface 300 further includes a user control 350 for displaying nutrition facts about a selected product (i.e., the selected product 360).

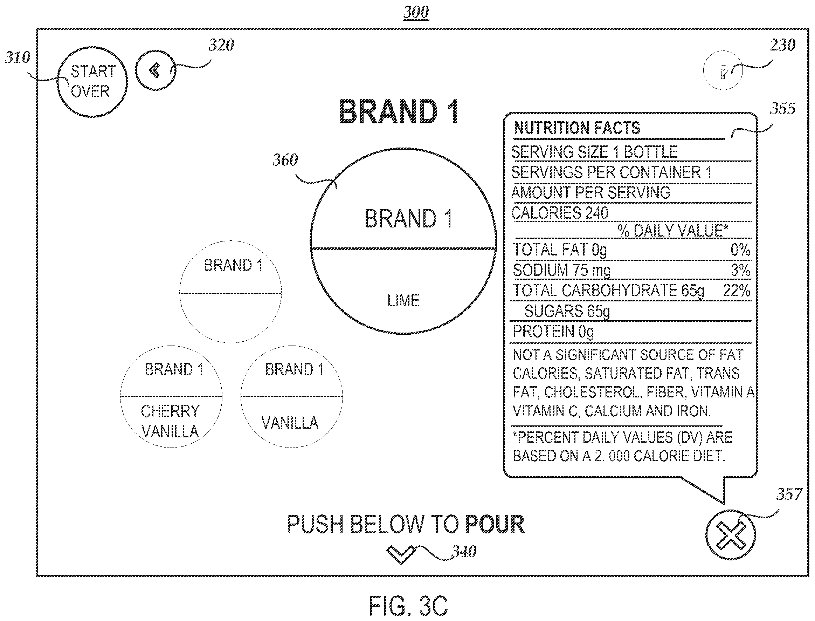

FIGURE 3C shows the user interface 300 which may be utilized for displaying information about a selected product. In particular, in response to a selection of the user control 350 in FIGURE 3B, the user interface 300 may display a facts panel 355 containing nutrition information for the selected product 360. The facts panel 355 may be closed in response to the consumer selecting user control 357.

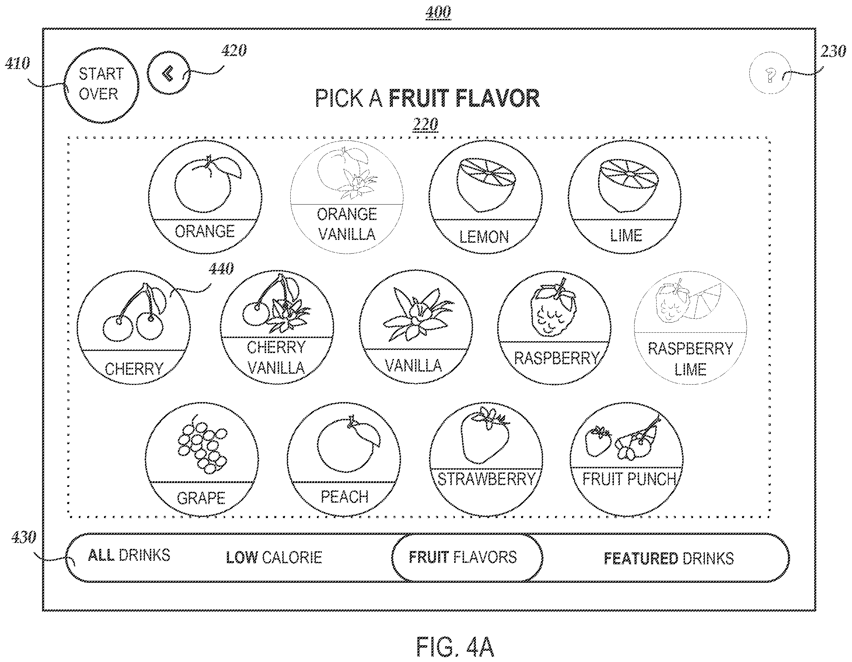

FIGURE 4A shows a user interface 400 which may be utilized for selecting a sub-menu associated with a selected product category from the user interface 200 of FIGURES 2A and 2B on the dispensing device 10. The user interface 400 may be generated by the application 35 executing on the dispensing device 10. The user interface 400 includes a sub-menu of the product category 220 and, in accordance with some embodiments, may display a list of flavor additive options, such as fruit flavor options, which are associated with beverages available for dispensing from the dispensing device 10 (e.g., flavor option 440 corresponds to cherry-flavored beverages). While Figure 4A shows a fruit flavor category, other flavor additive categories may also be utilized. The user interface 400 also includes a user control 410 for returning to a "Start" screen on the dispensing device 10 and a user control 420 for returning to a previously displayed screen (i.e., the product category menu shown in the user interface 200) on the dispensing device 10. The user interface 300 also includes the "Help" user control 230 which may be selected by a consumer to review instructions for selecting and dispensing a product from dispensing device 10. The user interface 400 also includes a navigation menu 430 which displays the currently selected product category as well as user interface buttons for navigating to other product category screens (which may be selected in the event a consumer mistakenly selected the current sub-menu or changed his or her mind after selecting the current sub-menu).

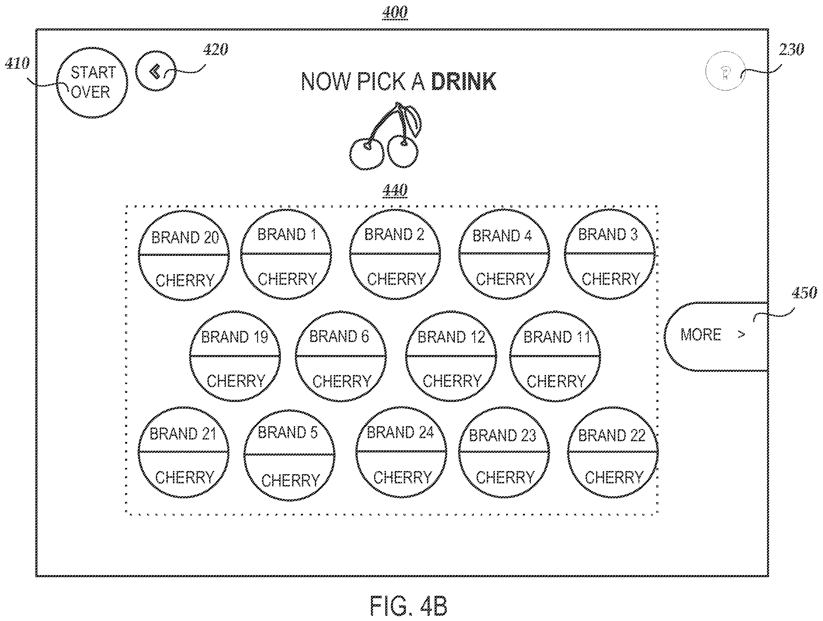

FIGURE 4B shows the user interface 400 which may be utilized for selecting a product from the sub-menu associated with the selected product category shown in FIGURE 4A. For example, in response to a consumer selecting the option 440 (i.e., cherry-flavored beverages) from the sub-menu in Figure 4A, the user interface 400 may display a list of cherry-flavored beverage products which may be available for dispensing from the dispensing device 10. The user interface 400 also includes optional user control 450 which may be selected for displaying additional products corresponding to the selected option 440.

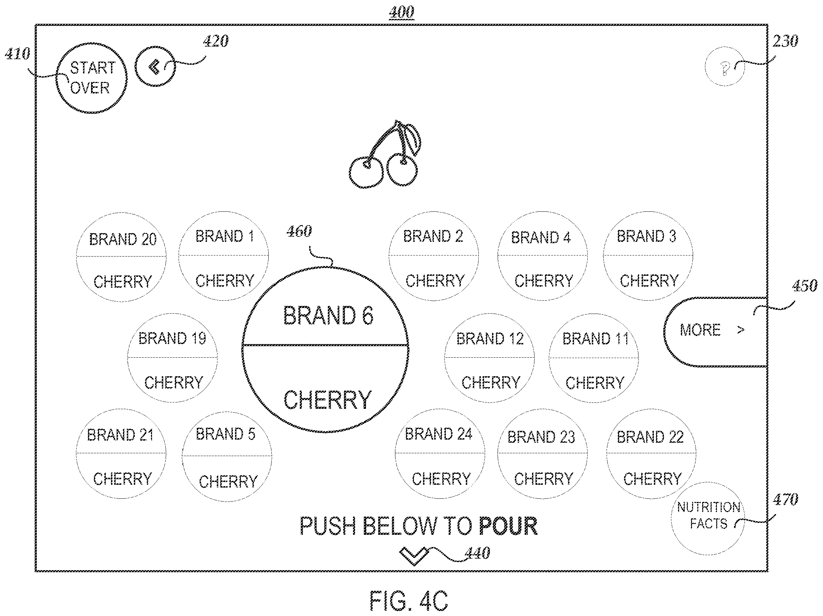

FIGURE 4C shows the user interface 400 which may be utilized for selecting a product associated with the list of flavored beverage products shown in FIGURE 4B. In particular, the user interface 400 also shows the selection of a product 460 (i.e., "Brand 6, Cherry") from among the displayed list of options as indicated by the product 460 being emphasized (i.e., displayed larger) with respect to the other displayed products in the user interface 400. The user interface 400 also includes a user control 440 to initiate an action (e.g., the pouring of a beverage) associated with the selected product 460 from the dispensing device 10. In some embodiments, the user control 440 may simply be a notification for a consumer to activate a pour mechanism (not shown) which is separate from the user interface 400. The user interface 400 further includes a user control 450 for displaying nutrition facts about a selected product (i.e., the selected product 460).

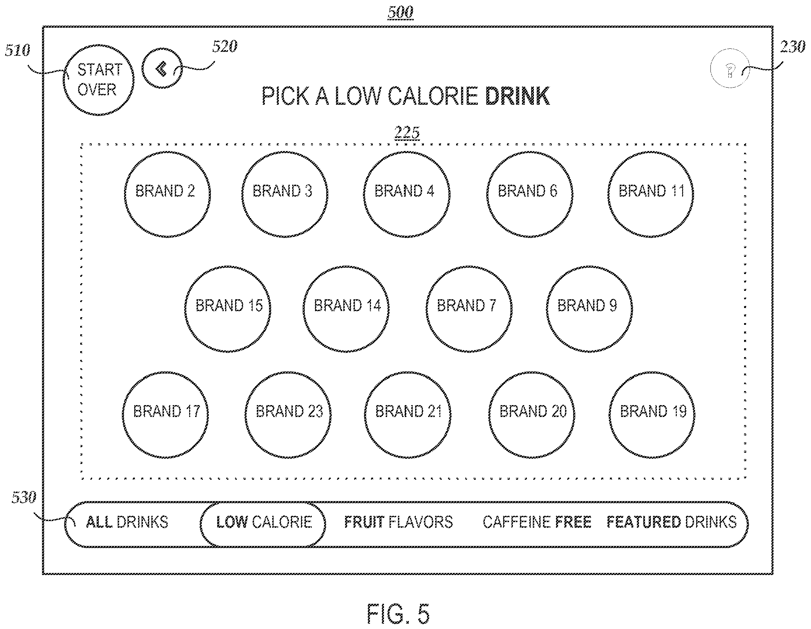

FIGURE 5 shows a user interface 500 which may be utilized for selecting a sub-menu associated with a selected product category from the user interface 200 of FIGURES 2A and 2B on the dispensing device 10. The user interface 500 may be generated by the application 35 executing on the dispensing device 10. The user interface 500 includes a sub-menu of the product category 225 and, in accordance with some embodiments, may display a list of low or no calorie beverages available for dispensing from the dispensing device 10. The user interface 500 also includes a user control 510 for returning to a "Start" screen on the dispensing device 10 and a user control 520 for returning to a previously displayed screen (i.e., the product category menu shown in the user interface 200) on the dispensing device 10. The user interface 500 also includes the "Help" user control 230 which may be selected by a consumer to review instructions for selecting and dispensing a product from dispensing device 10. The user interface 500 also includes a navigation menu 530 which displays the currently selected product category as well as user interface buttons for navigating to other product category screens (which may be selected in the event a consumer mistakenly selected the current sub-menu or changed his or her mind after selecting the current sub-menu).

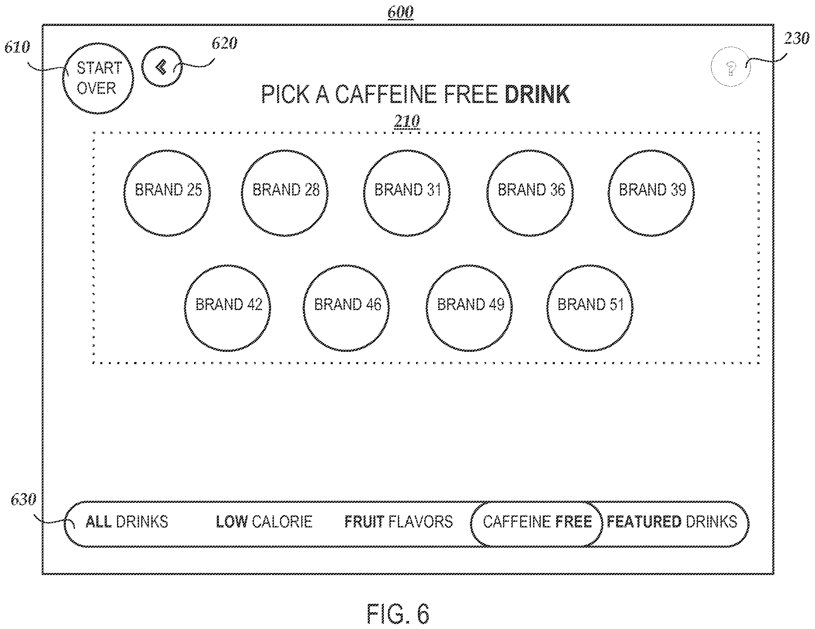

FIGURE 6 shows a user interface 600 which may be utilized for selecting a sub-menu associated with a selected product category from the user interface 200 of FIGURES 2A and 2B on the dispensing device 10. The user interface 600 may be generated by the application 35 executing on the dispensing device 10. The user interface 600 includes a sub-menu of the product category 210 and, in accordance with some embodiments, may display a list of caffeine-free beverages available for dispensing from the dispensing device 10. The user interface 600 also includes a user control 610 for returning to a "Start" screen on the dispensing device 10 and a user control 620 for returning to a previously displayed screen (i.e., the product category menu shown in the user interface 200) on the dispensing device 10. The user interface 600 also includes the "Help" user control 230 which may be selected by a consumer to review instructions for selecting and dispensing a product from dispensing device 10. The user interface 600 also includes a navigation menu 630 which displays the currently selected product category as well as user interface buttons for navigating to other product category screens (which may be selected in the event a consumer mistakenly selected the current sub-menu or changed his or her mind after selecting the current sub-menu).

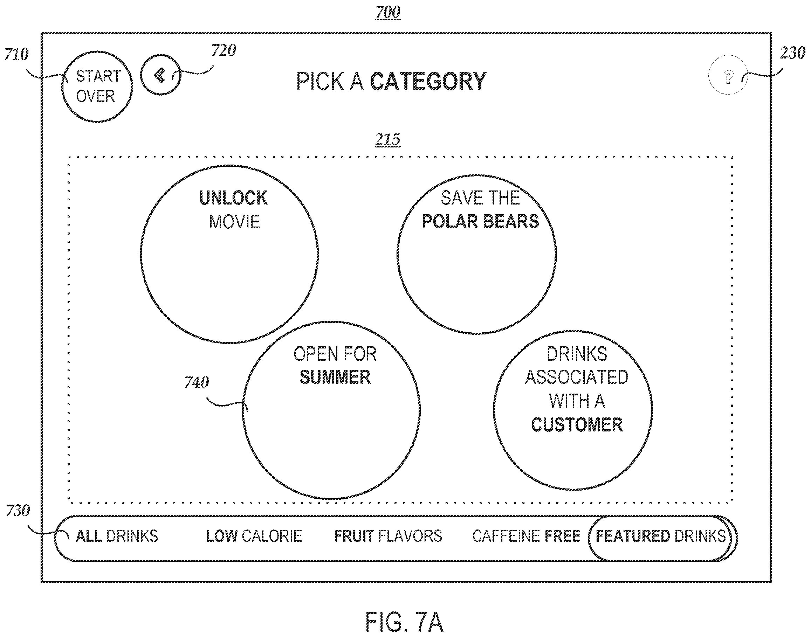

FIGURE 7A shows a user interface 700 which may be utilized for selecting a sub-menu associated with a selected product category from the user interface 200 of FIGURES 2A and 2B on the dispensing device 10. The user interface 700 may be generated by the application 35 executing on the dispensing device 10. The user interface 700 includes a sub-menu of the product category 215 and, in accordance with some embodiments, may display a list of promotional or advertising campaigns (such as the campaign 740) which are associated with one or more featured beverage brands are available on the dispensing device 10. Examples of promotional or advertising campaigns include a movie that is about to be release in theaters and upcoming sporting events, television shows, etc. The user interface 700 also includes a user control 710 for returning to a "Start" screen on the dispensing device 10 and a user control 720 for returning to a previously displayed screen (i.e., the product category menu shown in the user interface 200) on the dispensing device 10. The user interface 700 also includes the "Help" user control 230 which may be selected by a consumer to review instructions for selecting and dispensing a product from dispensing device 10. The user interface 700 also includes a navigation menu 730 which displays the currently selected product category as well as user interface buttons for navigating to other product category screens (which may be selected in the event a consumer mistakenly selected the current sub-menu or changed his or her mind after selecting the current sub-menu).

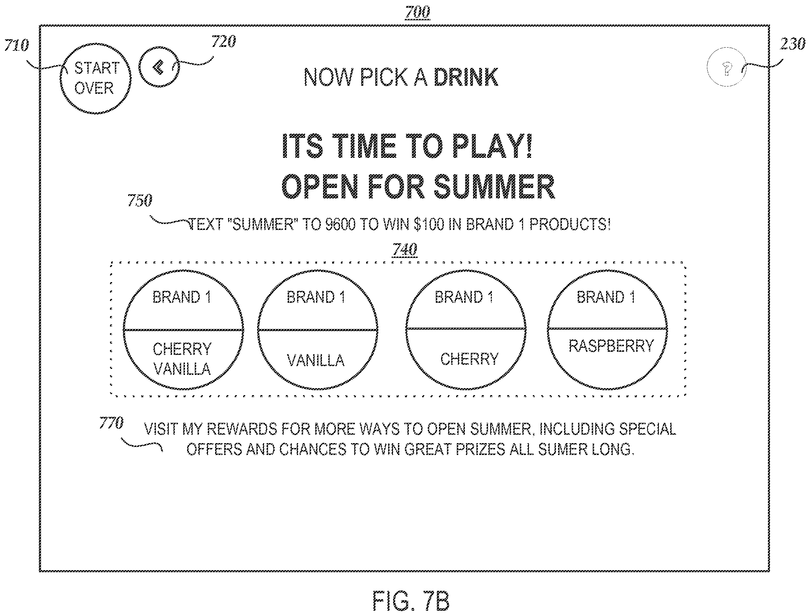

Turning now to FIGURE 7B, the user interface 700 shows the promotional campaign 740 which is associated with a beverage brand and includes a list of beverages being promoted which may be selected by a consumer for dispensing from the dispensing device 10. The promotional campaign includes an offer 750 for winning an award as well as a message 770 directing the consumer for additional offers and opportunities to win prizes associated with the campaign. Reward points may be also awarded upon dispensing a beverage associated with a promotional or advertising campaign. In addition, the consumer may share the dispensing of a product via social media and earn reward points as well.

It should be understood that the product categories described above with respect to FIGURES 2-7 are not so limited and that other product categories (and/or sub-categories) may further include teas, sports drinks, juices, energy drinks and coffee. In some embodiments, the selection of product categories (and sub-categories or menus) described above with respect to FIGURES 2-7 may be made according to a hierarchical or combinatorial categorization scheme. For example, a hierarchical scheme may include a nutrition information category which may include as sub-categories: calorie content, caffeine, Nutraceuticals/vitamins, and sweetener type. As another example, a hierarchical scheme may comprise a product attribute category which is associated with the following sub-categories: cola, non-cola, carbonated water, still water, color, hot beverages, cold beverages, smoothie-based beverages and frozen carbonated beverages. A combinatorial scheme may include selecting a low calorie beverage prior to selecting a caffeine free beverage.

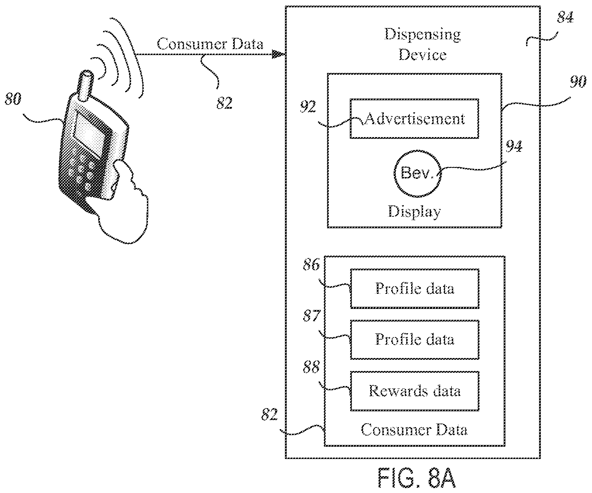

In some embodiments, the promotional or advertising campaigns in a product category may be associated with beverage products which may be offered for a limited time period and/or to a limited number of consumers. For example, as shown in FIGURE 8A, a consumer can store consumer data 82 on dispensing device 84 via a mobile computing device 80. The consumer data 82 may include profile data 86 relating to the consumer's beverage preferences, custom recipes 87 as well as rewards data 88 associated with a particular beverage provider. The dispensing device 84 is configured to receive the consumer data 82 via a handshaking procedure with the mobile computing device 80. The handshake may be accomplished via any of a number of communication methods including, but not limited to, BLUETOOTH wireless technology, NFC or Wi-Fi. The handshake may alternatively be accomplished via a consumer's mobile computing device scanning a one or two-dimensional barcode (e.g., a QR code) or other symbol (not shown) which may be displayed on a tag or sticker affixed to, printed on the dispensing device 94 or displayed on the display screen 90 of the dispensing device 84. The consumer data 82 may be stored and transmitted immediately or during predetermined periods (e.g., nightly data transfers). A beverage product associated with a promotional or advertising campaign (e.g., the advertisement 92 shown on display screen 90 of the dispensing device 84) may comprise a new brand/flavor offered for testing to consumers by a beverage provider. For example, a consumer, utilizing an application on the mobile computing device 80, may be presented with a survey for providing feedback with respect to a beverage after the beverage has been dispensed from the dispensing device 84. As non-limiting examples, the advertisement 92 shown on the display screen 90 of the dispensing device 84 may comprise a scene from a movie about to be released in theaters or an upcoming sporting event, television show, etc. The display screen 92 may also include an icon 94 which may comprise a selectable user control for allowing a consumer to select a beverage that is being promoted with an advertising campaign or event. For example, for a sporting event, the icon 94 may be associated with a new sports beverage which is about to be released. As another example, the icon 94 may be associated with a drink having a red color which is being utilized to promote a horror movie. In some embodiments, a beverage associated with a promotional or advertising campaign may only be made available to certain consumers for a limited time period. For example, based on the profile data 86 (which may or may not include a consumer's reward point total), a beverage may be offered or withheld. For example, a consumer with a high reward (e.g., loyalty) point total may be rewarded by being included in a test market. In accordance with some embodiments, more than one limited time only beverage may be presented to the consumer. For example, a consumer with a high reward point total may be presented with three limited time only beverages, while a consumer with a low point total may be presented with only one limited time only beverage. It should be understood that the length of time that a beverage is available may be controlled by a beverage provider via software updates made to the dispensing device 84 or via other methods. For example, beverage cartridges may be shipped to customers and installed in dispensing devices. At certain times, the beverage provider may authorize a dispensing device to dispense a particular beverage for a limited time. When the limited time has elapsed, the beverage provider may then de-authorize the cartridges and as a result, the dispensing device may no longer offer or dispense the beverage.

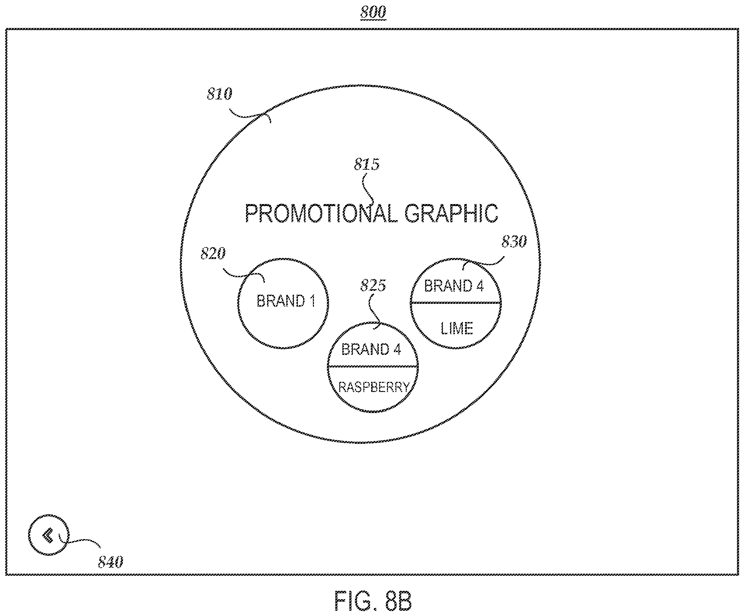

For example, FIGURE 8B shows a user interface 800, which may be displayed on the display screen 92, for selecting products associated with a limited time promotional campaign from the dispensing device 84. The user interface 800 may include an icon 810 which displays a promotional graphic 815 associated with a limited time promotional campaign (e.g., a scene from a movie about to be released in theaters or an upcoming sporting event, television show, etc.). The icon 810 may further include beverage product icons 820, 825 and 830 which may represent beverages available during a limited time promotional campaign. In some embodiments, each of the beverage product icons 820, 825 and 830 may comprise selectable user controls for dispensing beverage products which are associated with the limited time promotional campaign. In some embodiments, the icon 810 may be a selectable user control for enabling a consumer to dispense a mixed or blended beverage composed of the beverage products represented by the beverage product icons 820, 825 and 830. In some embodiments, the icon 810 may simply show the constituent beverage product icons 820, 825 and 830 to represent the beverage products in a promotional mixed or blended beverage and dispensing of the promotional beverage may be initiated through another selectable user control (not shown) such as a pour button or lever. The user interface 800 may further include a selectable user control 840 for returning to a previously displayed screen (i.e., the product category sub-menu shown in the user interface 700 of FIGURE 7A). The user interface 800 may be accessed via the navigation of menus and sub-menus on a dispensing device (e.g., the dispensing device 10 shown in FIGURE 1 or the dispensing device 84 shown in FIGURE 8). The user interface 800 can however always be accessed via a handshaking procedure with the mobile computing device 80 of FIGURE 8. As discussed above, it should be understood that the handshake may be accomplished via any of a number of communication methods including, but not limited to, BLUETOOTH wireless technology, NFC or Wi-Fi. The handshake may alternatively be accomplished via a consumer's mobile computing device scanning a one or two-dimensional barcode (e.g., a QR code) or other symbol (not shown) which may be displayed on a tag or sticker affixed to, printed on the dispensing device 94 or displayed on the display screen 90 of the dispensing device 84.

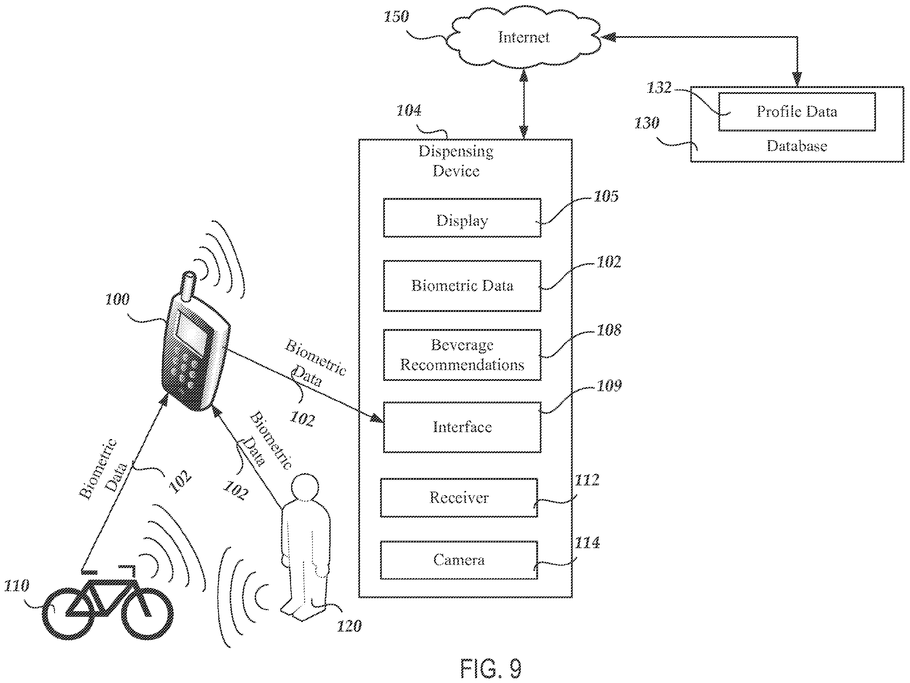

Biometric data is utilized to recommend beverage products to consumers. For example, FIGURE 9 shows a dispensing device 104 which is in communication with a mobile computing device 100 for receiving biometric data 102 generated by exercise equipment 110 and a consumer 120. In some embodiments, the biometric data 102 generated by the consumer 120 may be received from a personal data collection device (not shown) which is worn by the consumer 120. The exercise equipment 110 and the personal data collection device worn by the consumer 120 may include bikes, treadmills, pedometers, heart rate monitors, and fitness watches capable of generating and/or recording biometric data such as cadence, strides per mile, heart rate, and a running or biking pace. Other types of equipment may also be utilized for recording a consumer's biometric data. For example, a consumer's biometric data may be obtained from a bodyweight scale capable of computing a Body Mass Index (BMI) based on the consumer's weight, sex, and height. In some embodiments, the biometric data 102 may be transferred to and stored by the mobile computing device 100 utilizing any number of compatible technologies such as the ANT+ data transfer technology. The dispensing device 104 is configured with an interface 109 for receiving the biometric data 102 thereby enabling the communication with the mobile computing device 100 for the transfer of the biometric data 102. In some embodiments, the mobile computing device 100 may utilize an application (not shown) for analyzing the biometric data 102 and making beverage recommendations 108. Once the biometric data 102 has been analyzed by the dispensing device 104 and the beverage recommendations have been formed 108, the consumer 120 utilizes the mobile computing device 100 to initiate a handshake transfer of the beverage recommendations 108 to the dispensing device 104. It should be understood that the transfer between the mobile computing device 100 and the dispensing device 104 may be performed via any of a number of communication methods including BLUETOOTH wireless technology and NFC utilizing receiver 112 in the dispensing device 104. Alternatively, the transfer may be performed via the scanning of a one or two-dimensional barcode (e.g., a QR code) by an onboard camera 114 in the dispensing device 104. It should be understood that the biometric data 102 collected by the mobile computing device 100 need not be collected from a single instance. In other words, the biometric data 102 may be collected over time to build a profile. In addition, the mobile computing device 102 may receive data inputted directly by a consumer. For example, a consumer who is an athlete may input a training goal and a dieting consumer may input a weight goal. In some embodiments, the dispensing device 104 may utilize the interface 109 to receive the biometric data 102 directly from the mobile computing device 100 and analyze the biometric data 102 to form the beverage recommendations 108. The dispersing device 104 may also retrieve additional information (i.e., profile data 130) about a consumer via the Internet 150 by accessing a remote database 130 (not shown) maintained by a beverage provider in connection a rewards program. The dispensing device 104 further comprises a custom screen such as the display 105 for presenting a consumer with the beverage recommendations 108 based on the received biometric data 102. In some embodiments, the beverage recommendations 108 may include certain beverages on a consumer's Body Mass Index ("BMI") such that a consumer having a high BMI will only be recommended low calorie or non-caffeinated drinks. Similarly, a consumer's biometric data that shows recent high physical activity may be recommended a sports beverage. In some embodiments, the dispensing device 104 may be configured to display an option to revert to a standard selection screen or reject beverage selections displayed on the display 105. In other embodiments, the dispensing device 104 may be configured to not display recommendations that are unable to be dispensed (e.g., the dispensing device 104 is temporarily out-of-stock of a particular beverage). In other embodiments, the dispensing device 104 may be configured to award reward points to the consumer 120 based on an amount of biometric data provided, total beverages dispensed, etc.

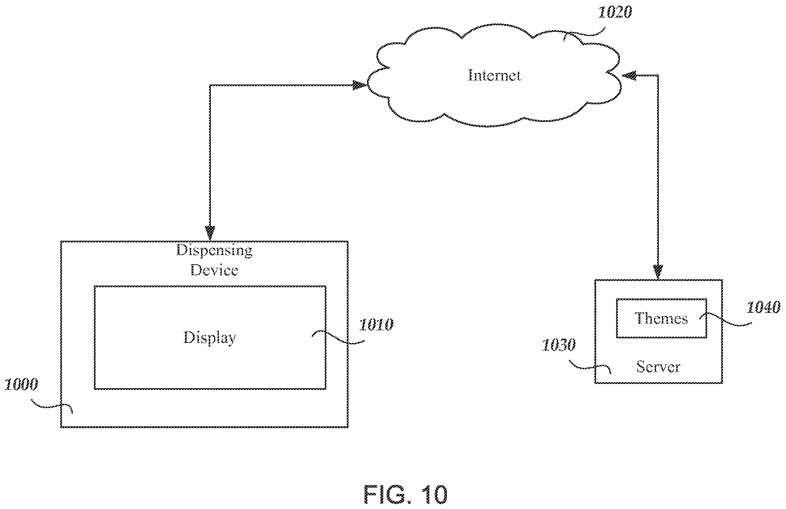

In some embodiments, dispensing devices may be configured to deploy product themes for use by consumers on a limited basis. For example, FIGURE 10 shows a dispensing device 1000 which includes a display 1010. The dispensing device 1000 may be in communication with a server 1030 over a connection to the Internet 1020. The server 1030 may store a collection of themes 1040 which may be retrieved and deployed by the dispenser 1000. In accordance with some embodiments, a provider customer (e.g., a beverage provider customer) may configure a selection screen on the dispensing device 1000 which may allow a consumer to choose a theme or a set of themes from the collection of themes 1040. For example, the consumer may have an account that allows them to purchase themes from the customer or, alternatively, they may be freely distributed. The consumer-selected themes may be downloaded during the dispensing devices 1000's next connection time to the server 1030 (e.g., nightly downloads). In some embodiments, the themes 1040 may control the operation of the dispensing device 1000. For example, a theme may configure the dispenser for use by a consumer who is blind. In particular, the theme may cause the dispensing device 1000 to audibly direct the consumer how to select a particular beverage (e.g., "tap once for a caffeinated beverage brand, tap twice for a fruit-flavored beverage," etc.). Thus, it should be appreciated that after a main brand is selected, the theme may direct the consumer to tap a certain number of times to select various flavors associated with the previously selected main brand. The theme may also cause the dispensing device 1000 to announce various selections made by the consumer. In accordance with some embodiments, each of the themes 1040 may also comprise different icons and graphics and also be language dependent. For example, the one or more themes may be configured to display text in German on the dispensing device 1000. In accordance with some embodiments, the themes 1040 may also contain different sets of product brands, different screen backgrounds, etc. Thus, when a consumer selects a theme on the dispensing device 1000, product brands which are associated with the selected theme may be displayed on the display 1010. In accordance with some embodiments, a theme may cause the dispensing device 1000 to run a diagnostic to determine if appropriate cartridges are installed for dispensing one or more beverages and cause the dispensing device 1000 to order them if they are not. Furthermore, the dispensing device 1000 may prevent a selected theme from operating until the appropriate cartridges have been installed. Additionally, one or more available themes in the themes 1040 may include an "activation time or trigger" so that enough time lapses for cartridges to be ordered and arrive if needed. The dispensing device 1000 may further be configured to compile content artifacts required to support new themes and queue them to be downloaded from the server 1030 if needed. The dispensing device 1000 may further be configured to prompt a consumer to activate a new theme upon being received from the server 1030. For example, the dispensing device 1000 may be configured to display a message on the display 1010 such as "Are you ready to activate the new theme?" It should be appreciated that a selected theme may also be configured to determine whether ingredients needed for dispensing a particular beverage are installed in the dispensing device 1000. In accordance with some embodiments, the themes 1040 may be temporally as well as geographically limited. For example, a provider may push new themes in connection with a special event occurring within a certain geographical area to all dispensing devices in that area. In some embodiments, the themes 1040 may comprise computer program container files (which may be both encrypted and compressed for security purposes) and which may also comprise additional files containing screen layouts definitions, graphics, beverage definitions, business rules (e.g., rules defining where and/or when to display screens which enable the selection of beverages), etc. In some embodiments, the aforementioned container files may be similar to or include Java ARchive ("JAR") files as well as Cabinet ("CAB") files. Other file formats may also be utilized. In order to selectively distribute the themes 1040 to particular dispensing devices, a customer may utilize a web-based system for accessing data needed to identify which dispensing devices the customer has and which enables the customer to select certain outlets to receive one or more themes. The selected dispensing devices may then receive a theme during scheduled connections (e.g., nightly downloads) with the server 1030.

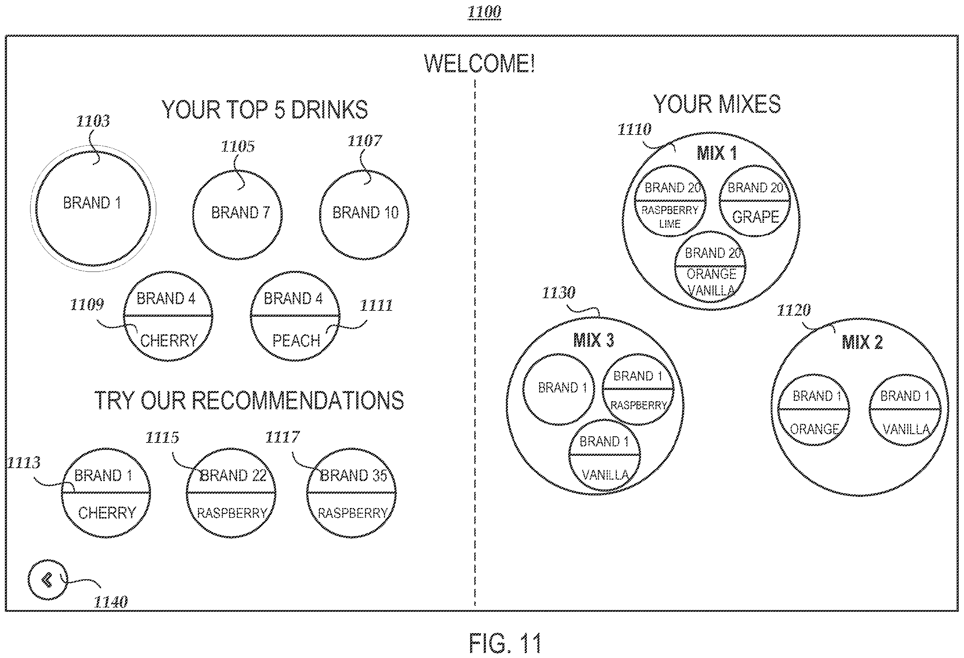

FIGURE 11 shows a user interface 1100 for selecting favorite products and custom product mixes which are accessed via a handshake operation (discussed above with respect to FIGURES 8A and 8B) from the user interface 200 of FIGURES 2A and 2B. The user interface 1100 may include a collection of a consumer's favorite beverage products which may be dispensed from a dispensing device via selectable user controls 1103, 1105, 1107, 1109 and 1111. The user interface 1100 may also include a collection of a consumer's custom beverages (e.g., beverage mixes) which may be dispensed via selectable user controls 1110, 1120 and 1130. The user interface 1100 further includes a list of recommended beverages based on the consumer's biometric data which may be dispensed via selectable user controls 1113, 1115 and 1117. The user interface 1100 may also include a selectable user control 1140 for returning to a previously displayed screen (i.e., the product category menu shown in the user interface 200) on the dispensing device 10.

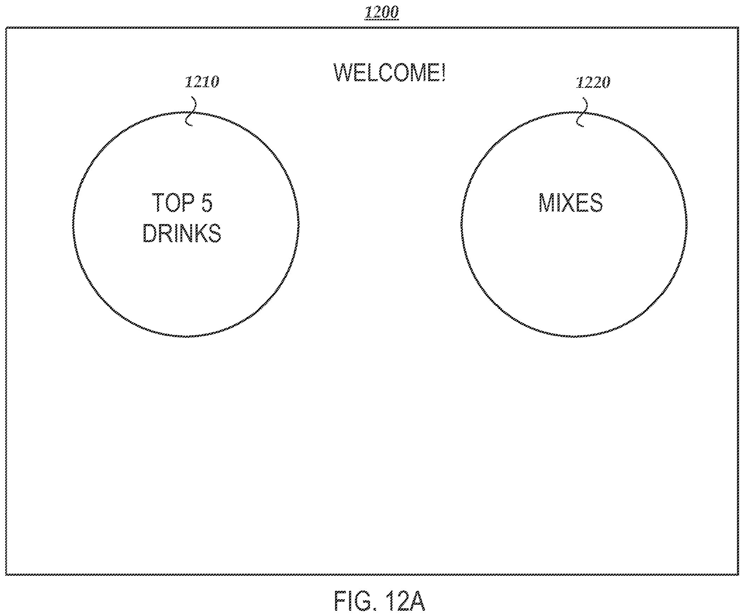

FIGURE 12A shows a user interface 1200 for selecting sub-menus associated with favorite products and custom product mixes, in accordance with an embodiment. The user interface 1100 is accessed via a handshake operation (discussed above with respect to FIGURES 8A and 8B) from the user interface 200 of FIGURES 2A and 2B. The user interface 1200 includes selectable user controls 1210 and 1220 for displaying sub-menus which may be utilized to select a consumer's favorite beverage products or a consumer's custom beverages (e.g., beverage mixes) for dispensing from a dispensing device.

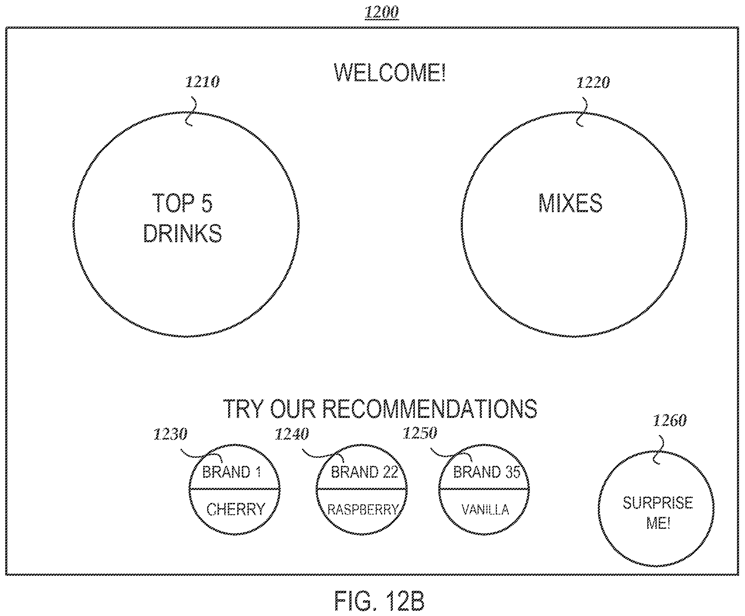

FIGURE 12B shows a user interface 1200 for selecting sub-menus associated with favorite products and custom product mixes, in accordance with an embodiment. The user interface 1100 is accessed via a handshake operation (discussed above with respect to FIGURES 8A and 8B) from the user interface 200 of FIGURES 2A and 2B. The user interface 1200 includes selectable user controls 1210 and 1220 for displaying sub-menus which may be utilized to select a consumer's favorite beverage products or a consumer's custom beverages (e.g., beverage mixes) for dispensing from a dispensing device. The user interface 1200 further includes a list of recommended beverages based on the consumer's biometric data which may be dispensed via selectable user controls 1230, 1240 and 1250 as well as a user control 1260 (i.e., a "Surprise Me!" icon) which may be selected to dispense a mystery beverage from a dispensing device. In some embodiments, the mystery beverage may comprise a new beverage product offered by a beverage provider or a random beverage. Upon selecting the "Surprise Me!" icon, a dispensing device may be configured to display an icon corresponding to the actual beverage to be dispensed to the consumer, prior to dispensing, so that the consumer may have the opportunity to not dispense the mystery beverage. For example, a consumer may choose not to dispense the mystery beverage if it is a non-diet beverage. In some embodiments, consumers may also be rewarded with reward points for trying the mystery beverage, sharing the mystery beverage (e.g., via social media outlets), etc.

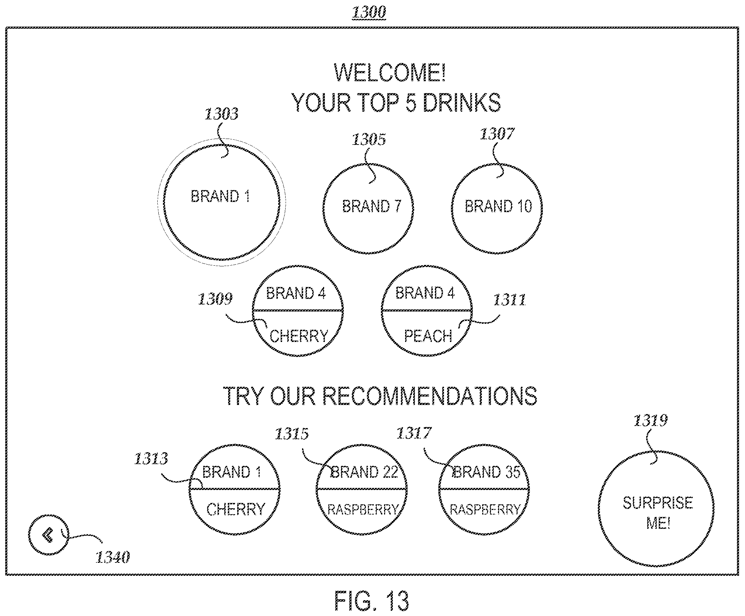

FIGURE 13 shows a user interface 1300 for selecting favorite products after a selection of one of the sub-menus shown in FIGURES 12A and 12B, in accordance with an embodiment. The user interface 1300 may include a collection of a consumer's favorite beverage products which may be dispensed from a dispensing device via selectable user controls 1303, 1305, 1307, 1309 and 1311. The user interface 1300 further includes a list of recommended beverages which may be dispensed via selectable user controls 1313, 1315 and 1317. The user interface 1300 may further include a user control 1319 (i.e., a "Surprise Me!" icon) which may be selected to dispense a mystery beverage (e.g., a new or random beverage) from a dispensing device. The user interface 1300 may also include a selectable user control 1340 for returning to a previously displayed screen (i.e., the user interface 1200 of FIGURES 12A or 12B) on a dispensing device.

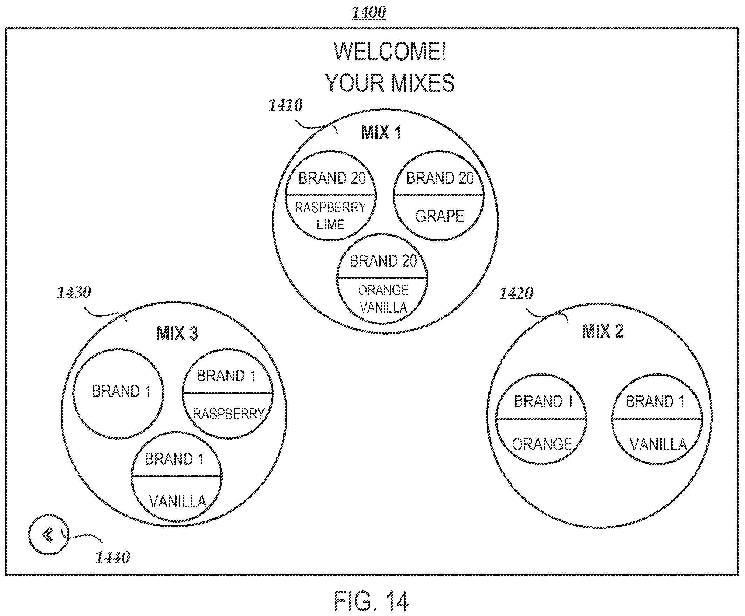

FIGURE 14 shows a user interface 1400 for selecting custom product mixes after a selection of one the sub-menus shown in FIGURES 12A and 12B, in accordance with an embodiment. The user interface 1400 may also include a collection of a consumer's custom beverages (e.g., beverage mixes) which may be dispensed via selectable user controls 1410, 1420 and 1430. The user interface 1400 may also include a selectable user control 1440 for returning to a previously displayed screen (i.e., the user interface 1200 of FIGURES 12A or 12B) on a dispensing device.

With respect to the above discussion of FIGURES 11-14, it should be understood that in some embodiments, consumers may create lists of favorite beverage products by utilizing an application (e.g., the application 37 of FIGURE 1) downloaded from a beverage product provider to a mobile computing device (e.g., the mobile computing device 40 of FIGURE 1). After the application has been downloaded, the consumer may follow prompts and other directions for creating a list of favorite beverages. The favorite beverages may be any beverage (e.g., flavored or unflavored) that may be dispensed by a beverage provider. It should be understood that the application may also be configured to limit a consumer to a preset number of favorites (e.g., five favorite beverages). Once a consumer has created a favorites list on their mobile computing device, the list may be saved within the application and optionally shared via various social media outlets. In some embodiments, the sharing of favorites may be rewarded with reward points. Furthermore, the application may be configured to share favorites automatically (with an opt-out feature), or the consumer may optionally choose to manually share one or more favorites lists. In some embodiments, after a favorites list has been saved, a consumer connects their mobile computing device with a dispensing device when a desired favorite is to be dispensed, via a handshaking procedure. The handshake may be accomplished via any connection method such as Bluetooth, NFC, Long Polling, Wi-Fi, QR Code readers, etc. During the handshake, the consumer's data is transferred to the dispensing device. The data may include all the consumer's custom recipes (e.g., beverage mixes) as well as rewards information. The data may be stored and transmitted to a beverage provider by the dispensing device immediately or during nightly data transfers. Once the dispenser has received a consumer's data, a custom screen is displayed (for example, "Welcome, Chris!") thereby enabling consumers to have a personal experience when interacting with dispensing devices. In some embodiments, reward points may be awarded upon dispensing and the dispensing may optionally be shared via various social media outlets so that the consumer may earn reward points.

In some embodiments, a dispensing device may be configured to display an icon which enables a consumer to return to a main or "home" display screen after the consumer has established a connection or otherwise accessed the dispenser via a mobile computing device. For example, a consumer may wish to interact with a dispensing device to earn reward points, but may not want to select a beverage from his or her favorite beverages list. Therefore, the consumer may be presented with an option on the dispensing device to select a beverage offered by the dispensing device and add it to his or her favorite beverages list. In some embodiments, the consumer may also be able to utilize a built-in camera on his or her mobile computing device to take a picture of a beverage product icon displayed on the dispensing device as a means of adding add a beverage to their favorite beverages list.

In some embodiments, reward points as a result of personal interactions with a dispensing device, may be awarded throughout different stages. For example, points may be awarded for downloading an application for connecting with a dispensing device on a consumer's mobile computing device, creating a first custom recipe (i.e., beverage mix) with increasing points for subsequent recipes, connecting to a dispensing device, sharing custom recipes via social media outlets, sharing the dispensing of beverage products via social media outlets, etc.

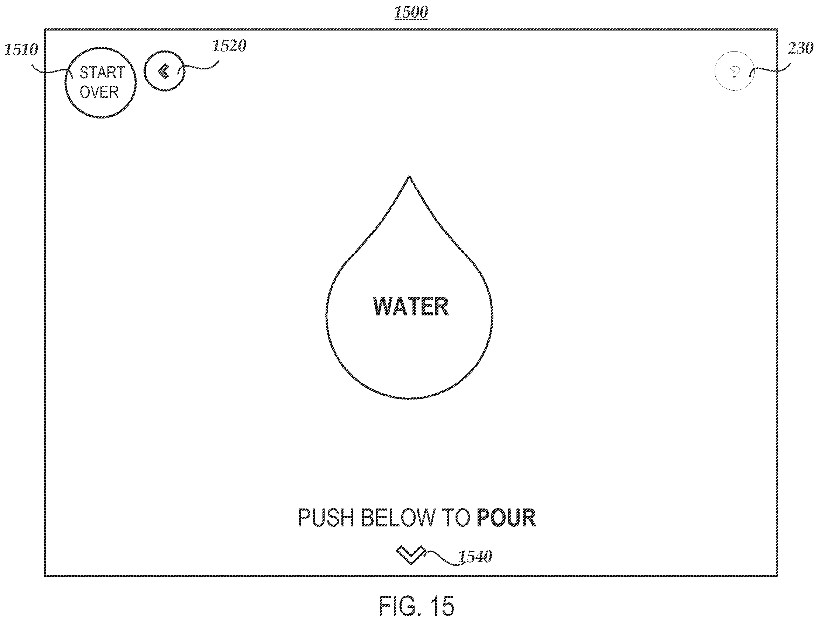

Turning now to FIGURE 15, a user interface 1500 is shown which may be utilized for directly accessing a product from the user interface 200 in response to a selection of the user control 250 shown in FIGURES 2A and 2B. As discussed above, with respect to FIGURE 2A, the user control 250 may be provided for instances when a consumer only wishes to quickly dispense a single product (e.g., water) from the dispensing device 10 without having to navigate through one or more of the product categories 205-225. The user interface 1500 also includes a user control 1510 for returning to a "Start" screen on the dispensing device 10 and a user control 1520 for returning to a previously displayed screen (i.e., the product category menu shown in the user interface 200) on the dispensing device 10. The user interface 1500 also includes the "Help" user control 230 which may be selected by a consumer to review instructions for selecting and dispensing a product from dispensing device 10. The user interface 1500 also includes a user control 1540 to initiate an action (e.g., the pouring of a beverage) of the product from the dispensing device 10.

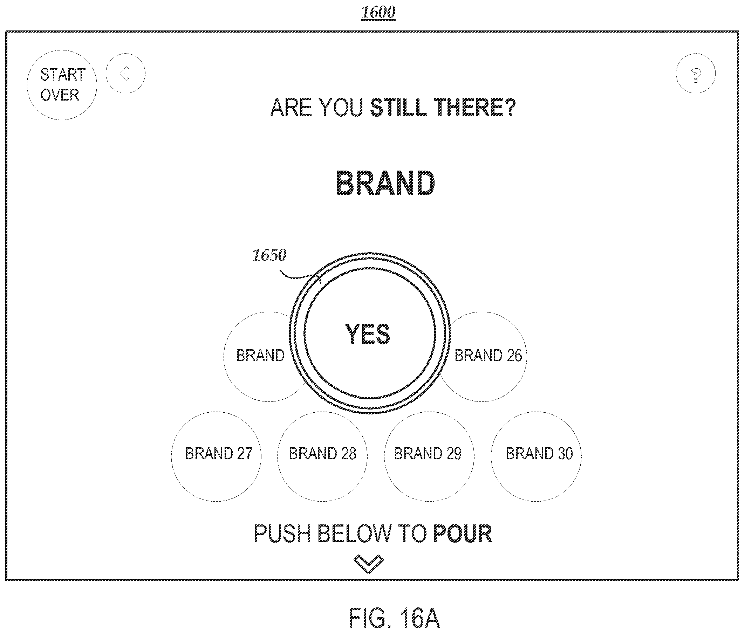

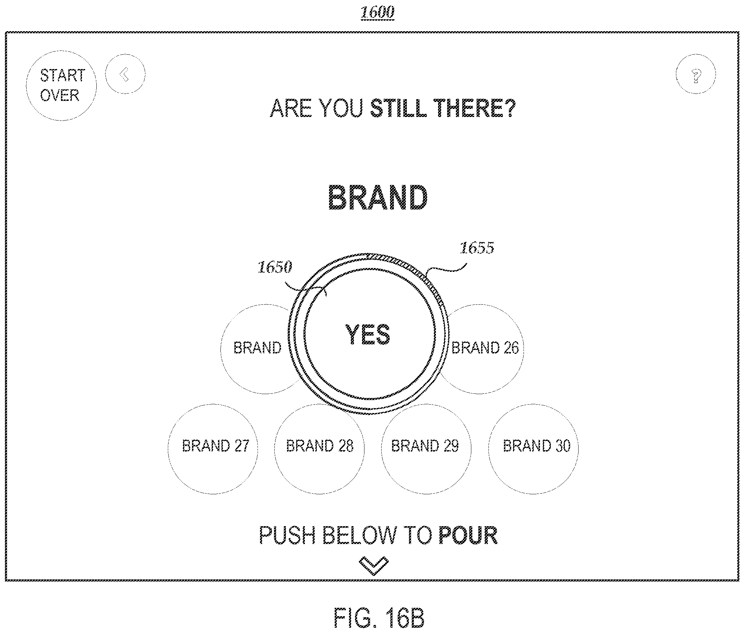

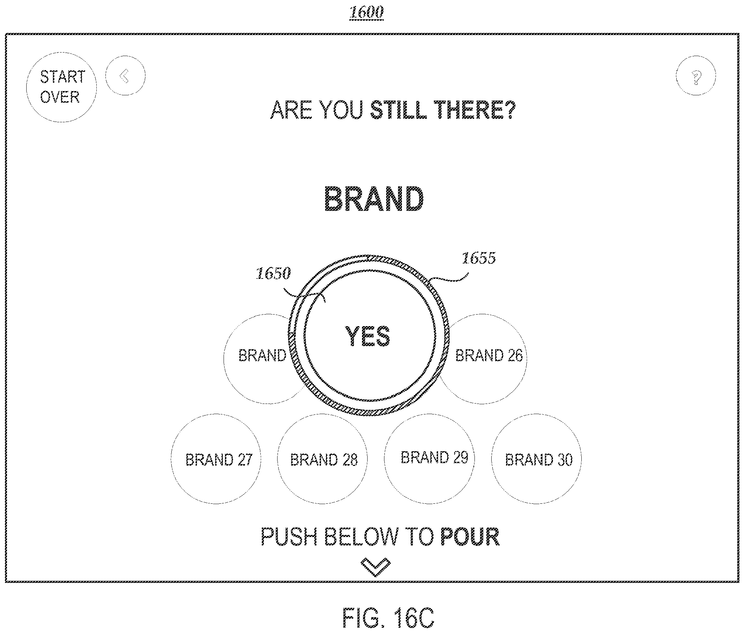

FIGURE 16A shows a user interface 1600 which may be utilized for expediting the selection of a product for dispensing from the dispensing device 10. The user interface 1600 shows a list of available products for dispensing along with a selectable user control 1650 which may be initiated after a predetermined time period has elapsed without the consumer selecting a product. In some embodiments, once the predetermined time period has elapsed, the application 35 on the dispensing device 10 may display the user control 1650 in the foreground of the user interface 1600 while sending the displayed products to the background of the user interface 1600. The user control 1650 may also display a countdown timer which, as shown in FIGURES 16B and 16C, displays a remaining time period in which a consumer may select the user control 1650 to return the display of the products back to the foreground in the user interface 1600. For example, as shown in FIGURE 16B, the user control 1650 shows the countdown timer 1655 as having 75% of the time period remaining and FIGURE 16C shows the countdown timer 1655 as having 25% of the time period remaining. The countdown timer may be stopped either in response to the selection of the user control 1650 or when the time period has elapsed at which time the user interface may return to a "Start" screen on the dispensing device 10.

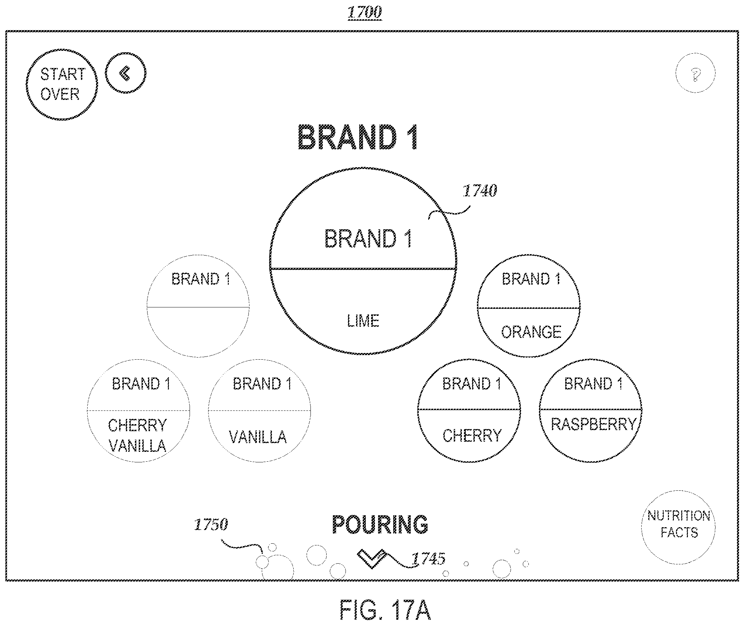

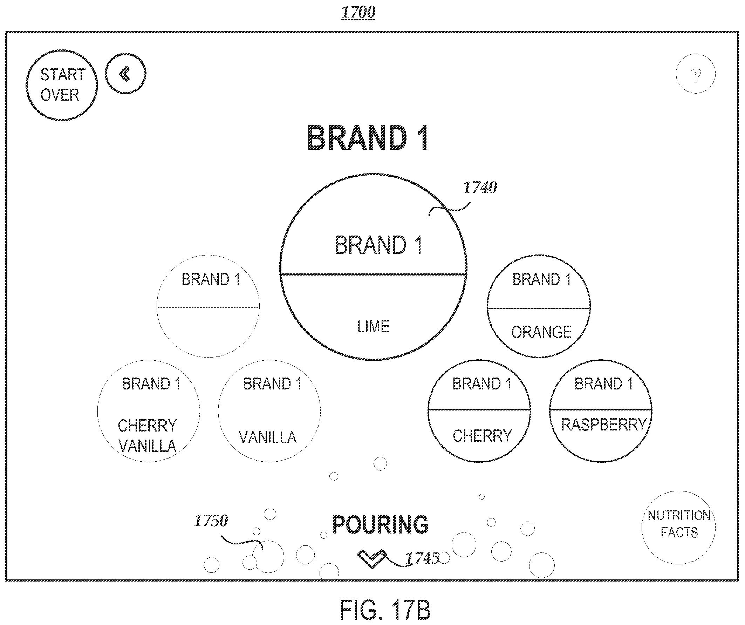

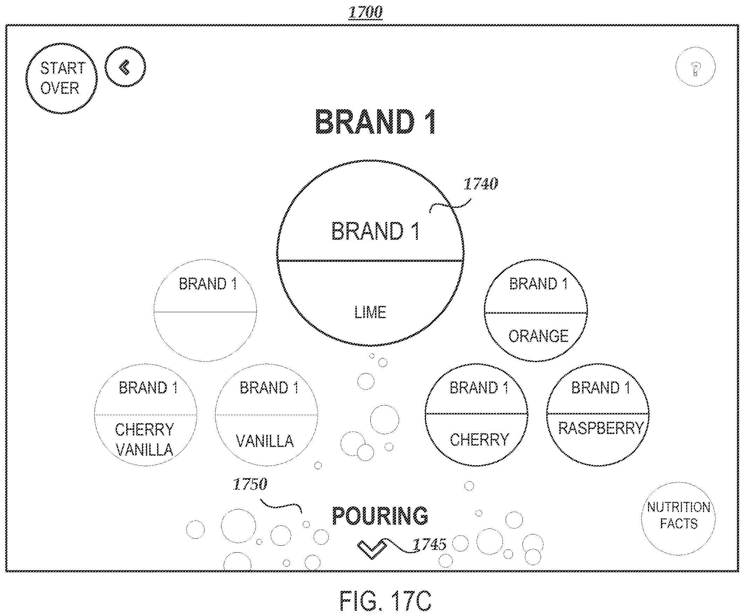

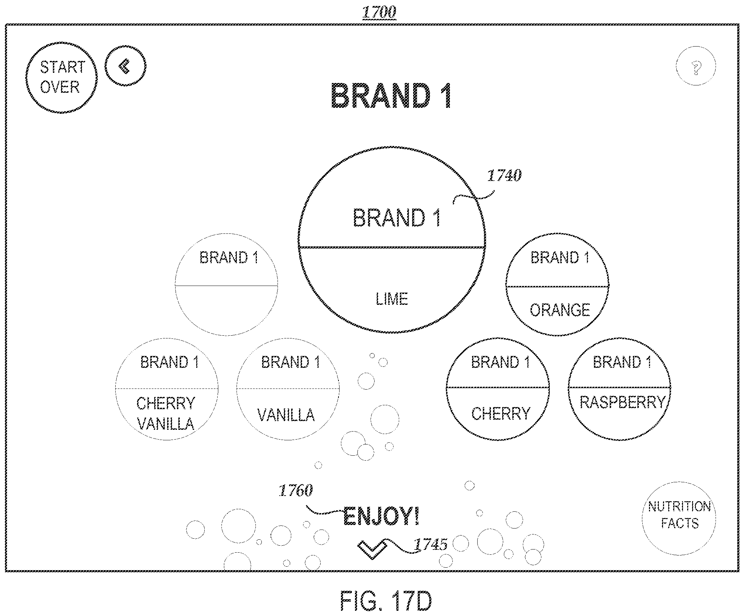

FIGURES 17A-17D shows a user interface 1700 which may be utilized for showing an animation associated with the dispensing of a selected product from the dispensing device 1700. For example, as shown in FIGURE 17A, the product 1740 (e.g., "Brand 1, Lime") has been selected in the user interface 100 and an action (e.g., the selection of the user control 1745) has been initiated to commence the dispensing of the product 1740 from the dispensing device 10. As shown in FIGURES 17A-17C, during the dispensing of the product 1740, an animation 1750 (shown by bubbles) may increase as the dispensing of the beverage nears completion until finally a message 1760 may be displayed indicating the completion of the dispensing of the product 1740 to a consumer.

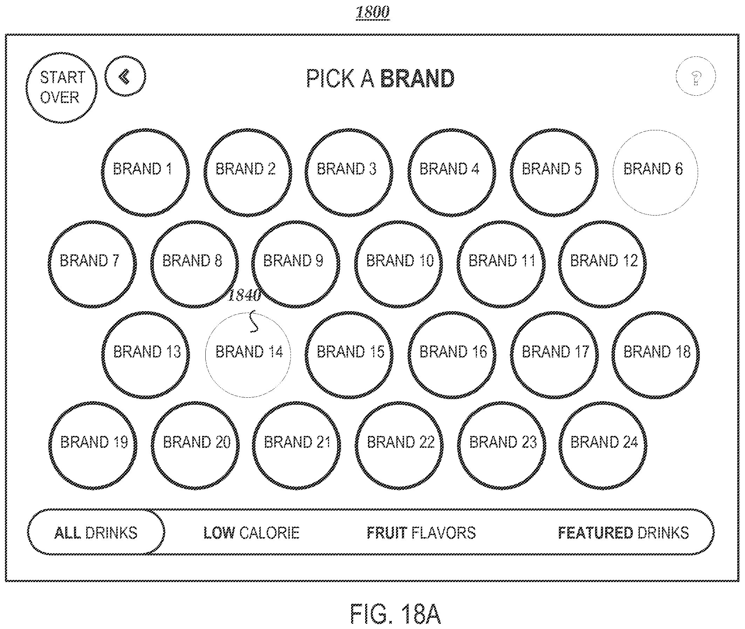

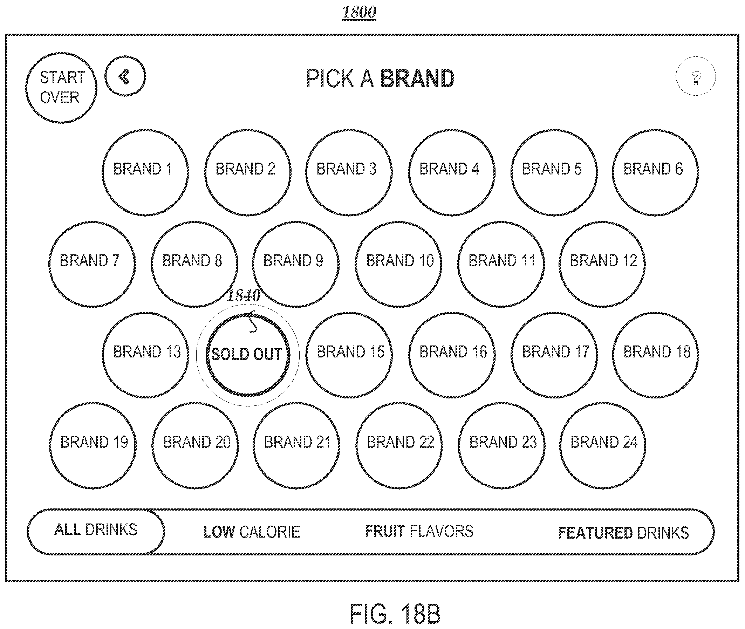

FIGURES 18A-18B shows a user interface 1800 which may be utilized for indicating a sold-out status of a product which may be dispensed from the dispensing device 10. Turning now to FIGURE 18A, the user interface 1800 indicates a sold-out status of the products 1830 (i.e., "Brand 6") and 1840 (i.e., "Brand 14") among the list of displayed products by de-emphasizing their associated selectable icons with respect to the remaining list of displayed products. It should be understood that other methods may also be utilized to indicate a sold-out status of products on the dispensing device 10. For example, as shown in FIGURE 18B, the sold-out status of the product 1840 (i.e., Brand 14") is indicated by replacing the product name on the icon with a "Sold Out" indicator.

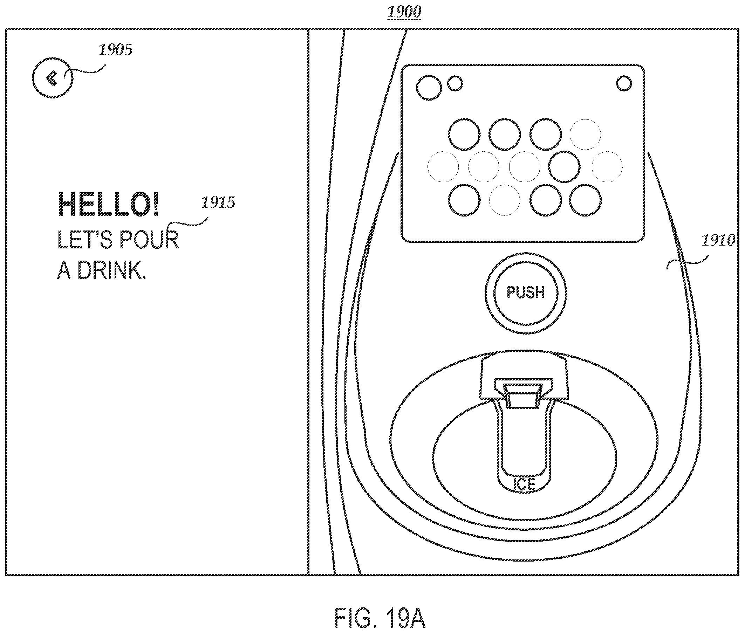

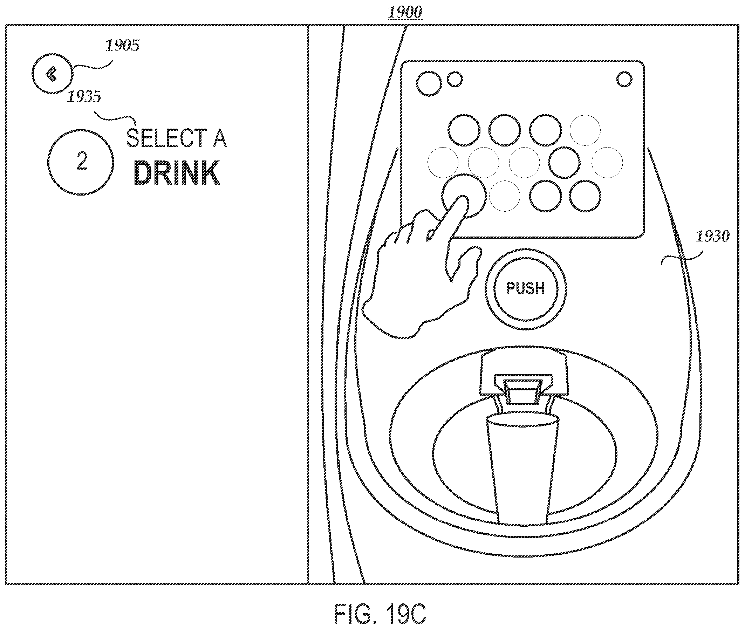

FIGURES 19A-19E show a user interface 1900 which may be utilized for displaying instructions for selecting and dispensing a product from dispensing device 10. In some embodiments, the user interface 1900 may be displayed in response to the "Help" user control 230 which is shown in FIGURES 2-7 (discussed above). Turning now to FIGURE 19A, the user interface 1900 shows instructions 1915 and an associated display 1910 of the dispensing device 10 to facilitate guiding the user through a series of steps for selecting and dispensing a product. The user interface 1900 also includes a user control 1905 for returning to a previous screen on the dispensing device 10.

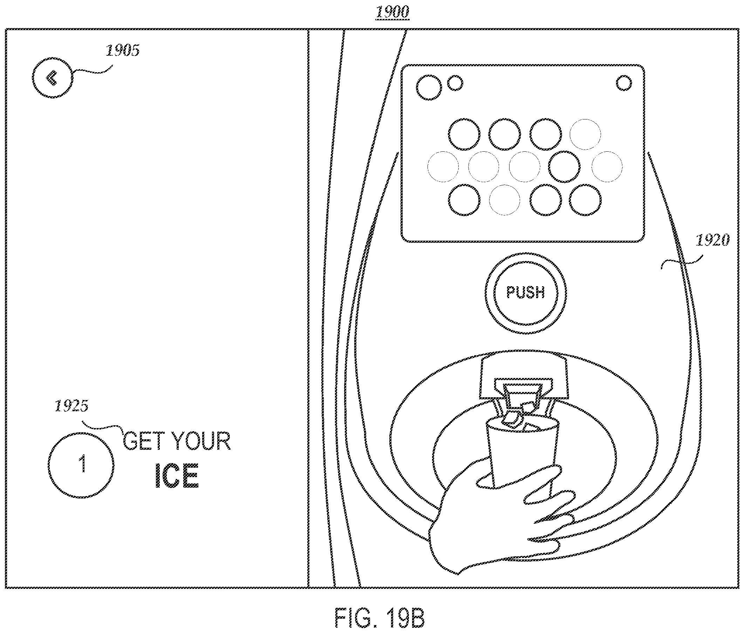

FIGURES 19B-19D shows the user interface 1900 displaying additional instructions for selecting and dispensing a product including instructions 1925 (FIGURE 19B) for retrieving ice for a beverage, instructions 1935 for selecting a beverage and instructions 1945 for dispensing a beverage. Each of the instructions 1925, 1935 and 1945 shown in the user interface 1900 may be accompanied by displays 1920, 1930 and 1940 which illustrate the instructions to a consumer.

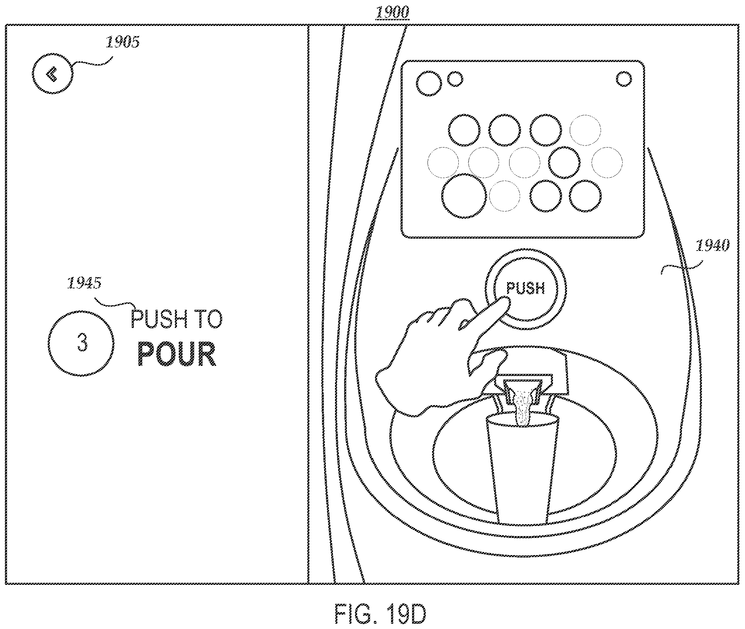

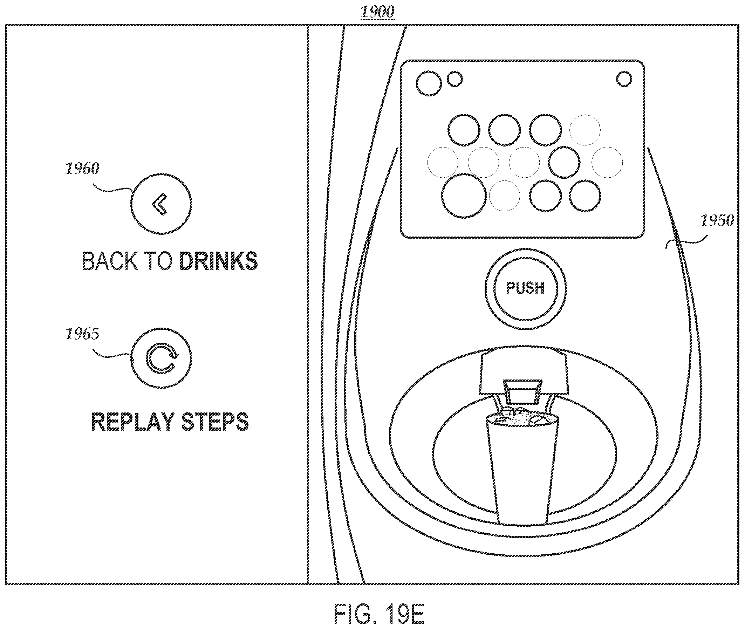

FIGURE 19E shows the user interface 1900 after the final instruction for selecting and presenting a product has been displayed as shown in FIGURE 19D. The user interface 1900 includes a display 1950 illustrating a dispensed product, a user control 1960 for returning back to an initial or "Start Menu" on the dispensing device 10 (from which a consumer may apply the previously viewed instructions 1915, 1925, 1935 and 1940 to select and dispense a product, and a user control 1965 for replaying the previously displayed instructions 1915, 1925, 1935 and 1940 (as well as the associated displays 1910, 1920, 1930 and 1940 which illustrate the aforementioned instructions).

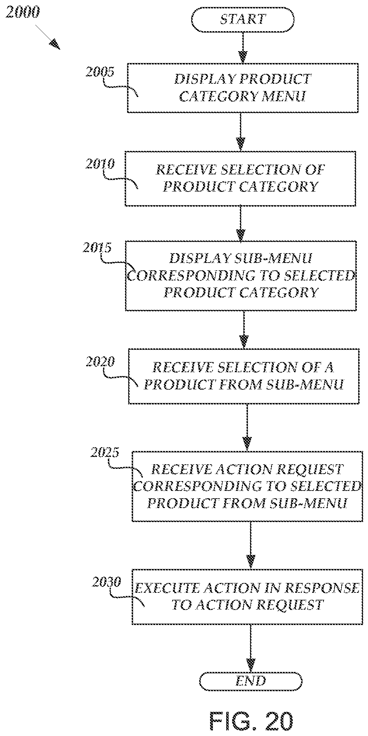

FIGURE 20 is a flow diagram illustrating a routine 2000 for providing a product categorization user interface on the dispensing device 10, in accordance with an embodiment. When reading the discussion of the routines presented herein, it should be appreciated that the logical operations of various embodiments of the present invention are implemented (1) as a sequence of computer implemented acts or program modules running on a computing device or system and/or (2) as interconnected machine logical circuits or circuit modules within the computing device or system. The implementation is a matter of choice dependent on the performance requirements of the computing device or system implementing the invention. Accordingly, the logical operations illustrated in FIGURE 20 and making up the various embodiments described herein are referred to variously as operations, structural devices, acts or modules. It will be recognized by one skilled in the art that these operations, structural devices, acts and modules may be implemented in software, in firmware, in hardware, in special purpose digital logical, and any combination thereof without deviating from the spirit and scope of the present invention as recited within the claims set forth herein.

The routine 2000 begins at operation 2005, where the application 35 executing on the dispensing device 10, may display a product category menu in a user interface from which a consumer may initiate the selection of a product for dispensing from the dispensing device 10. In one embodiment, the product category menu may include the display of different product categories and further display a scrolling list of available products for selection within each of the different product categories, in the user interface. As discussed above, the product categories may include all of a number of available beverage brands, a caffeine-free beverage category, a featured category associated with beverages tied to one or more promotional or advertising campaigns, a flavor category in which beverages are organized corresponding to a particular fruit flavor and a low-calorie or low-calorie/no calorie beverage category. Other types of product categories may also be utilized.

From operation 2005, the routine 2000 continues to operation 2010, where the application 35 executing on the dispensing device 10, may receive a selection of a product category from the product category menu displayed in the user interface, as described above at operation 2005.

From operation 2010, the routine 2000 continues to operation 2015, where the application 35 executing on the dispensing device 10, may display a sub-menu corresponding to the selected product category selected at operation 2010. For example, the sub-menu may include a selection of beverages corresponding to a particular fruit flavor (e.g., cherry) which corresponds to the selection of a flavor category received from the product category menu at operation 2010.

From operation 2015, the routine 2000 continues to operation 2020, where the application 35 executing on the dispensing device 10, may receive a selection of a product from the sub-menu displayed at operation 2015. As discussed above with respect to FIGURE 2B, in one embodiment, a product may be selected directly from the main product category menu displayed in the user interface 200 via a selection of a scrolling user interface element displayed within a product category (e.g., the scrolling user interface elements 260A-260E, 265A-265E, 270A-270E and 275A-275E) or via selection of the user control 250.

From operation 2020, the routine 2000 continues to operation 2025, where the application 35 executing on the dispensing device 10, may receive an action request corresponding to the product selected from the sub-menu at operation 2020. For example, the application 35 may receive a request to dispense a selected beverage from the dispensing device 10.

From operation 2025, the routine 2000 continues to operation 2030, where the application 35 executing on the dispensing device 10, may execute the requested action in response to the action request received at operation 2025. For example, the application 35 may instruct the dispensing device 10 to dispense a selected beverage or display nutritional facts associated with a selected beverage in a user interface. From operation 2030, the routine 2000 then ends.

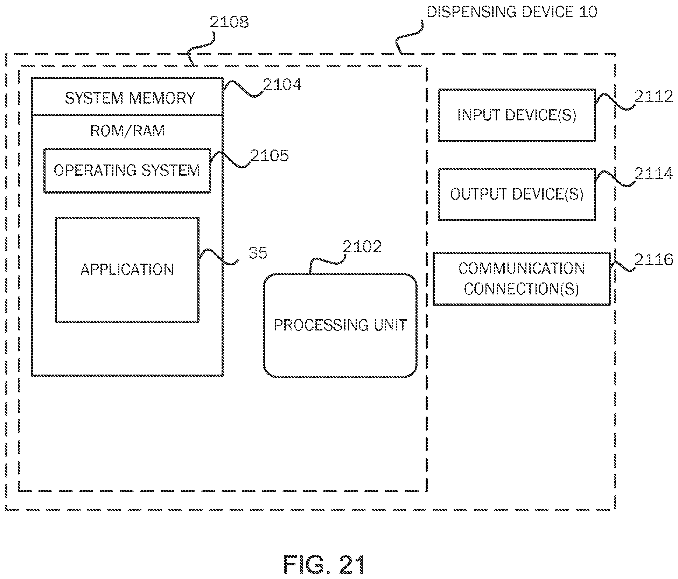

FIGURE 21 is a simplified block diagram of a dispensing device 10 with which various embodiments may be practiced. In a basic configuration, the dispensing device 10 may comprise a computing device which includes at least one processing unit 2102 and a system memory 2104. Depending on the configuration and type of computing device, system memory 2104 may comprise, but is not limited to, volatile (e.g. random access memory (RAM)), non-volatile (e.g. read-only memory (ROM)), flash memory, or any combination. System memory 2104 may include an operating system 2105 and the application 35. The operating system 2105 may be suitable for controlling the dispensing device 10's operation.

The dispensing device 10 may have additional features or functionality. For example, the consumer electronic device 20 may also include additional data storage devices (not shown) which may be removable and/or non-removable such as, for example, magnetic disks, optical disks, solid state storage devices ("SSD"), flash memory or tape. The dispensing device 10 may also have input device(s) 2112 such as a keyboard, a mouse, a pen, a sound input device (e.g., a microphone), a touch input device, etc. Output device(s) 2114 such as a touchscreen display, speakers, a printer, etc. may also be included. The aforementioned devices are examples and others may be used. Communication connection(s) 2116 may also be included and utilized to connect to the Internet (or other types of networks) as well as to remote computing systems.

Various embodiments, for example, may be implemented as a computer process (method), a computing system, or as an article of manufacture, such as a computer program product or computer readable media. The computer program product may be a computer storage media readable by a computer system and encoding a computer program of instructions for executing a computer process.

The term computer readable media as used herein may include computer storage media. Computer storage media may include volatile and nonvolatile, removable and non-removable media implemented in any method or technology for storage of information (such as computer readable instructions, data structures, program modules, or other data) in hardware. The system memory 2104 is an example of computer storage media (i.e., memory storage.) Computer storage media may include, but is not limited to, RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other medium which can be used to store information and which can be accessed by the dispensing device 10. Any such computer storage media may also be part of the dispensing device 10. Computer storage media does not include a carrier wave or other propagated or modulated data signal.

The term computer readable media as used herein may also include communication media. Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

## Claims

1. A dispensing device, comprising:
a memory for storing executable program code;
a display screen; and
a processor, functionally coupled to the memory, the processor being responsive to computer-executable instructions included in the program code and operative to:
receive a consumer's biometric data including the consumer's body mass index and/or recent physical activity performed by the consumer via a handshaking procedure with a mobile computing device; and
display on the display screen a customised user interface based upon said received consumer biometric data, the customised user interface comprising a menu, the menu comprising one or more selectable user controls for displaying one or more sub menus utilizable by the consumer to select one or more beverage products including a list of recommended beverage products based upon the received consumer biometric data;
receive a selection of one of the plurality of beverage products from the one or more sub menus;
receive an action request corresponding to the selected one of the plurality of beverage products from the one or more sub menus via the display screen; and
execute an action associated with the selected one of the plurality of products from the one or more sub menus in response to receiving the action request.

2. The dispensing device of claim 1, wherein the processor is further operative to:
display on the display screen a symbol to be used by the mobile computing device to at least partly facilitate the handshaking procedure.

3. The dispensing device of claim 1, wherein the processor is further operative to:
initiate a countdown timer upon determining an absence of a selection of one of the plurality of beverage products from the one or more sub menus;
display a user control corresponding to a remaining time period for the countdown timer; and
determine whether a selection of the user control is received during the remaining time period.

4. The dispensing device of claim 3, wherein the processor is further operative to:
display a menu comprising a plurality of beverage product categories in the user interface in the absence of a selection of the user control during the remaining time period.

5. The dispensing device of claim 3, wherein the processor is further operative to display an animation associated with the user control, the animation corresponding to the remaining time period for the countdown timer.

6. The dispensing device of claim 1, wherein the processor is further operative to de-emphasize the display of one or more of the one or more possible beverage products having a sold-out status.

7. The dispensing device of claim 1, wherein the processor is further operative to:
display on the user interface a selectable user control for returning to a beverage product category menu on the dispensing device.

8. The dispensing device of claim 1, wherein the processor is further operative to display on the user interface a selectable user control for a mystery beverage, and wherein the processor is preferably further operative to reward the consumer with reward points when the consumer selects the mystery beverage.

9. The dispensing device of claim 1, wherein the consumer biometric data has been directly input into the mobile computing device by the consumer, or wherein the consumer biometric data has been received at the mobile computing device from a personal data collection device worn by the consumer, a bodyweight scale or exercise equipment.

10. The dispensing device of claim 1, further comprising one or more symbols operative to facilitate, at least in part, the handshaking procedure.

11. The dispensing device of claim 1, wherein the processor is further operative to:
display nutrition data associated with the product selection.

12. A computer-readable storage medium storing computer executable instructions which, when executed by a dispensing apparatus will cause the dispensing apparatus to perform a method of providing a product categorization user interface, the method comprising:
receiving a consumer's biometric data including the consumer's body mass index and/or recent physical activity performed by the consumer from a mobile computing device via a handshaking procedure with the mobile computing device;
based upon said received consumer biometric data, displaying one or more possible beverage choice options on a customised user interface, including a list of recommended beverages based on the received consumer biometric data;
receiving a beverage selection from the user interface; and
issuing a command for the beverage selection to be dispensed by the dispensing apparatus.

13. The computer-readable storage medium of claim 12, wherein the method further comprises:
displaying a symbol to be used by the mobile computing device to at least partly facilitate the handshaking procedure.

14. The computer-readable storage medium of claim 12, wherein the method further comprises:
displaying on the user interface a selectable user control for a mystery beverage; or.
displaying nutrition data associated with the beverage selection in the user interface.

15. The computer-readable storage medium of claim 12, wherein the method further comprises a consumer directly inputting their consumer biometric data to the mobile computing device by the consumer, or the method further comprises receiving consumer biometric data at the mobile computing device from a personal data collection device worn by the consumer, a bodyweight scale or exercise equipment.

## Patentansprüche

1. Abgabevorrichtung, umfassend:
einen Speicher zum Speichern von ausführbarem Programmcode;
einem Displaybildschirm; und
einen Prozessor, der funktionell mit dem Speicher gekoppelt ist, wobei der Prozessor auf computerausführbare Befehle reaktionsfähig ist, die in dem Programmcode enthalten sind, und betreibbar ist, um:
die biometrischen Daten eines Verbrauchers, einschließlich des Body-Mass-Index des Verbrauchers und/oder der kürzlich vom Verbraucher durchgeführten körperlichen Aktivität, über einen Handshaking-Vorgang mit einer mobilen Rechenvorrichtung zu empfangen; und
auf dem Displaybildschirm eine angepasste Benutzerschnittstelle basierend auf den empfangenen biometrischen Daten des Verbrauchers anzuzeigen, wobei die angepasste Benutzerschnittstelle ein Menü umfasst, wobei das Menü eine oder mehrere auswählbare Benutzersteuerungen zum Anzeigen eines oder mehrerer Untermenüs umfasst, die vom Verbraucher verwendet werden können, um ein oder mehrere Getränkeprodukte einschließlich einer Liste empfohlener Getränkeprodukte basierend auf den empfangenen biometrischen Daten des Verbrauchers auszuwählen;
eine Auswahl eines der mehreren Getränkeprodukte aus dem einen oder mehreren Untermenüs zu empfangen;
eine Handlungsanforderung entsprechend dem ausgewählten der mehreren Getränkeprodukte aus dem einen oder mehreren Untermenüs über den Displaybildschirm zu empfangen; und
eine Handlung auszuführen, die dem ausgewählten der mehreren Produkte aus dem einen oder den mehreren Untermenüs zugeordnet ist, als Reaktion auf das Empfangen der Anforderung für die Handlung.

2. Abgabevorrichtung nach Anspruch 1, wobei der Prozessor ferner betreibbar ist, um:
auf dem Displaybildschirm ein Symbol anzuzeigen, das von der mobilen Rechenvorrichtung zu verwenden ist, um den Handshaking-Vorgang zumindest teilweise zu erleichtern.

3. Abgabevorrichtung nach Anspruch 1, wobei der Prozessor ferner betreibbar ist, um:
einen Countdown-Timer zu starten, wenn bestimmt wird, dass keine Auswahl eines der mehreren Getränkeprodukte aus dem einen oder den mehreren Untermenüs vorliegt;
eine Benutzersteuerung anzuzeigen, die einer verbleibenden Zeitspanne für den Countdown-Timer entspricht; und
zu bestimmen, ob eine Auswahl der Benutzersteuerung während der verbleibenden Zeitspanne empfangen wird.

4. Abgabevorrichtung nach Anspruch 3, wobei der Prozessor ferner betreibbar ist, um:
ein Menü, das mehrere Getränkeproduktkategorien umfasst, in der Benutzerschnittstelle anzuzeigen, wenn in der verbleibenden Zeitspanne keine Auswahl durch die Benutzersteuerung erfolgt.

5. Abgabevorrichtung nach Anspruch 3, wobei der Prozessor ferner betreibbar ist, um eine der Benutzersteuerung zugeordnete Animation anzuzeigen, wobei die Animation der verbleibenden Zeitspanne für den Countdown-Timer entspricht.

6. Abgabevorrichtung nach Anspruch 1, wobei der Prozessor ferner betreibbar ist, um die Anzeige eines oder mehrerer der einen oder mehreren möglichen Getränkeprodukte, die einen Ausverkauft-Status aufweisen, zu schwächen.

7. Abgabevorrichtung nach Anspruch 1, wobei der Prozessor ferner betreibbar ist, um:
auf der Benutzeroberfläche eine auswählbare Benutzersteuerung für die Rückkehr zu einem Getränkeproduktkategorie-Menü an der Abgabevorrichtung anzuzeigen.

8. Abgabevorrichtung nach Anspruch 1, wobei der Prozessor ferner betreibbar ist, um auf der Benutzeroberfläche eine auswählbare Benutzersteuerung für ein Geheimgetränk anzuzeigen, und wobei der Prozessor bevorzugt ferner betreibbar ist, um den Verbraucher mit Belohnungspunkten zu belohnen, wenn der Verbraucher das Geheimgetränk auswählt.

9. Abgabevorrichtung nach Anspruch 1, wobei die biometrischen Daten des Verbrauchers vom Verbraucher direkt in die mobile Rechenvorrichtung eingegeben wurden, oder wobei die biometrischen Daten des Verbrauchers an der mobilen Rechenvorrichtung von einer vom Verbraucher getragenen persönlichen Datenerfassungsvorrichtung, einer Körpergewichtswaage oder einem Trainingsgerät empfangen wurden.

10. Abgabevorrichtung nach Anspruch 1, die ferner ein oder mehrere Symbole umfasst, die betreibbar sind, um zumindest teilweise den Handshaking-Vorgang zu erleichtern.

11. Abgabevorrichtung nach Anspruch 1, wobei der Prozessor ferner betreibbar ist, um:
die der Produktauswahl zugeordneten Nährwertdaten anzeigen.

12. Computerlesbares Speichermedium, das computerausführbare Befehle speichert, die, wenn sie von einer Abgabevorrichtung ausgeführt werden, die Abgabevorrichtung veranlassen, ein Verfahren zum Bereitstellen einer Produktkategorisierungs-Benutzerschnittstelle durchzuführen, wobei das Verfahren umfasst:
Empfangen von biometrischen Daten eines Verbrauchers, einschließlich des Body-Mass-Index des Verbrauchers und/oder der vom Verbraucher kürzlich durchgeführten körperlichen Aktivität, von einer mobilen Rechenvorrichtung über einen Handshaking-Vorgang mit der mobilen Rechenvorrichtung;
basierend auf den empfangenen biometrischen Daten des Verbrauchers, Anzeigen einer oder mehrerer möglicher Getränkeauswahloptionen auf einer angepassten Benutzeroberfläche, die eine Liste empfohlener Getränke basierend auf den empfangenen biometrischen Daten des Verbrauchers beinhaltet;
Empfangen einer Getränkeauswahl von der Benutzerschnittstelle; und
Ausgeben eines Befehls für die Getränkeauswahl, die von der Abgabevorrichtung abgegeben werden soll.

13. Computerlesbares Speichermedium nach Anspruch 12, wobei das Verfahren ferner umfasst:
Anzeige eines Symbols, das von der mobilen Rechenvorrichtung zu verwenden ist, um den Handshaking-Vorgang zumindest teilweise zu erleichtern.

14. Computerlesbares Speichermedium nach Anspruch 12, wobei das Verfahren ferner umfasst:
Anzeigen einer auswählbaren Benutzersteuerung für ein Geheimgetränk auf der Benutzeroberfläche; oder
Anzeigen von Nährwertdaten, die der Getränkeauswahl zugeordnet sind, auf der Benutzeroberfläche.

15. Computerlesbares Speichermedium nach Anspruch 12, wobei das Verfahren ferner die direkte Eingabe der biometrischen Daten des Verbrauchers in die mobile Rechenvorrichtung durch den Verbraucher umfasst, oder das Verfahren ferner das Empfangen der biometrischen Daten des Verbrauchers an der mobilen Rechenvorrichtung von einer vom Verbraucher getragenen persönlichen Datenerfassungsvorrichtung, einer Körpergewichtswaage oder einem Trainingsgerät umfasst.

## Revendications

1. Dispositif de distribution, comprenant :
une mémoire permettant de stocker un code de programme exécutable ;
un écran d'affichage ; et
un processeur, couplé de manière fonctionnelle à la mémoire, le processeur répondant aux instructions exécutables par ordinateur dans le code de programme et fonctionnant de manière à :
recevoir des données biométriques d'un consommateur comprenant l'indice de masse corporelle du consommateur et/ou une activité physique récente exécutée par le consommateur par le biais d'une procédure d'établissement de liaison avec un dispositif informatique mobile ; et
afficher sur l'écran d'affichage une interface utilisateur personnalisée sur la base desdites données biométriques de consommateur reçues, l'interface utilisateur personnalisée comprenant un menu, le menu comprenant une ou plusieurs commandes d'utilisateurs sélectionnables permettant d'afficher un ou plusieurs sous-menus utilisables par le consommateur pour sélectionner un ou plusieurs produits de boissons comprenant une liste de produits de boissons recommandés sur la base des données biométriques de consommateur reçues ;
recevoir une sélection d'un produit parmi la pluralité de produits de boissons à partir de l'un ou des plusieurs sous-menus ;
recevoir une demande d'action correspondant aux produits sélectionnés parmi la pluralité de produits de boissons à partir de l'un ou des plusieurs sous-menus par le biais de l'écran d'affichage ; et
exécuter une action associée au produit sélectionné parmi la pluralité de produits à partir de l'un ou des plusieurs sous-menus en réponse à la réception de la demande d'action.

2. Dispositif de distribution selon la revendication 1, dans lequel le processeur fonctionne en outre de manière à :
afficher sur l'écran d'affichage un symbole à utiliser par le dispositif informatique mobile pour au moins en partie faciliter la procédure d'établissement de liaison.

3. Dispositif de distribution selon la revendication 1, dans lequel le processeur fonctionne en outre de manière à :
initier un compteur de compte à rebours lors de la détermination d'une absence de sélection d'un produit parmi la pluralité de produits de boissons à partir de l'un ou des plusieurs sous-menus ;
afficher une commande d'utilisateur correspondant à une période de temps restante pour le compteur de compte à rebours ; et
déterminer si une sélection de la commande d'utilisateur est reçue pendant la période de temps restante.

4. Dispositif de distribution selon la revendication 3, dans lequel le processeur fonctionne en outre de manière à :
afficher un menu comprenant une pluralité de catégories de produits de boissons dans l'interface utilisateur en l'absence d'une sélection de la commande d'utilisateur pendant la période de temps restante.

5. Dispositif de distribution selon la revendication 3, dans lequel le processeur fonctionne en outre de manière à afficher une animation associée à la commande d'utilisateur, l'animation correspondant à la période de temps restante pour le compteur de compte à rebours.

6. Dispositif de distribution selon la revendication 1, dans lequel le processeur fonctionne en outre de manière à réduire l'importance de l'affichage d'un ou plusieurs produits parmi le ou les plusieurs produits de boissons possibles dont l'état est épuisé.

7. Dispositif de distribution selon la revendication 1, dans lequel le processeur fonctionne en outre de manière à :
afficher sur l'interface utilisateur une commande d'utilisateur sélectionnable permettant de retourner à un menu d'une catégorie de produits de boissons sur le dispositif de distribution.

8. Dispositif de distribution selon la revendication 1, dans lequel le processeur fonctionne en outre de manière à afficher sur l'interface utilisateur une commande d'utilisateur sélectionnable pour une boisson mystère, et dans lequel le processeur fonctionne en outre de préférence de manière à récompenser le consommateur avec des points de récompense lorsque le consommateur sélectionne la boisson mystère.

9. Dispositif de distribution selon la revendication 1, dans lequel les données biométriques de consommateurs ont été directement entrées dans le dispositif informatique mobile par le consommateur, ou dans lequel les données biométriques de consommateurs ont été reçues au niveau du dispositif informatique mobile à partir d'un dispositif de collecte de données personnelles porté par le consommateur, une échelle de poids corporel ou un équipement d'exercice.

10. Dispositif de distribution selon la revendication 1, comprenant en outre un ou plusieurs symboles fonctionnant de manière à faciliter, au moins en partie, la procédure d'établissement de liaison.

11. Dispositif de distribution selon la revendication 1, dans lequel le processeur fonctionne en outre de manière à :
afficher des données nutritionnelles associées à la sélection du produit.

12. Support de stockage lisible par ordinateur stockant des instructions exécutables par ordinateur qui, lorsqu'elles sont exécutées par un appareil de distribution, amèneront l'appareil de distribution à exécuter un procédé de fourniture d'une interface utilisateur de catégorisation de produit, le procédé comprenant :
la réception des données biométriques d'un consommateur comprenant l'indice de masse corporelle du consommateur et/ou une activité physique récente exécutée par le consommateur à partir d'un dispositif informatique mobile par le biais d'une procédure d'établissement de liaison avec le dispositif informatique mobile ;
sur la base desdites données biométriques de consommateurs reçues, afficher une ou plusieurs options de choix de boissons possibles sur une interface utilisateur personnalisée, comprenant une liste de boissons recommandées sur la base des données biométriques de consommateurs reçues ;
la réception d'une sélection de boissons à partir de l'interface utilisateur ; et
l'émission d'une commande pour la sélection de boissons à distribuer par l'appareil de distribution.

13. Support de stockage lisible par ordinateur selon la revendication 12, dans lequel le procédé comprend en outre :
l'affichage d'un symbole à utiliser par le dispositif informatique mobile pour au moins en partie faciliter la procédure d'établissement de liaison.

14. Support de stockage lisible par ordinateur selon la revendication 12, dans lequel le procédé comprend en outre :
l'affichage sur l'interface utilisateur d'une commande d'utilisateur sélectionnable pour une boisson mystère ; ou
l'affichage de données nutritionnelles associées à la sélection de boissons dans l'interface utilisateur.

15. Support de stockage lisible par ordinateur selon la revendication 12, dans lequel le procédé comprend en outre un consommateur entrant directement ses données biométriques de consommateurs sur le dispositif informatique mobile par le consommateur, ou le procédé comprend en outre la réception de données biométriques de consommateurs au niveau du dispositif informatique mobile provenant du dispositif de collecte de données personnelles porté par le consommateur, une échelle de poids corporel ou un équipement d'exercice.
